# EUROPEAN PATENT APPLICATION

(11) **EP 4 711 719 A1**
(43) Date of publication of application: **18.03.2026**
(21) Application number: 24803273.2
(22) Date of filing: 11.03.2024
(51) Int. Cl.: G01C 21/36, G08G 1/123

(54) **INFORMATION PROCESSING DEVICE, INFORMATION PROCESSING METHOD, AND PROGRAM**

(30) Priority: 11.05.2023 JP 2023078554
(71) Applicant: TOYOTA JIDOSHA KABUSHIKI KAISHA, Toyota-shi Aichi 471-8571 (JP)
(72) Inventor: KADOTANI, Naotoshi, Toyota-shi, Aichi 471-8571 (JP); NISHIKAWA, Yuki, Toyota-shi, Aichi 471-8571 (JP); TAKAHASHI, Yuki, Toyota-shi, Aichi 471-8571 (JP); KIKUIRE, Nana, Toyota-shi, Aichi 471-8571 (JP); KUWABARA, Takahiko, Tokyo 103-0022 (JP); GICHU, Ryusei, Tokyo 103-0022 (JP); OTA, Takashi, Tokyo 103-0022 (JP); IWASE, Toshifumi, Tokyo 103-0022 (JP); ITO, Hironori, Tokyo 103-0022 (JP); INOUE, Hisanobu, Tokyo 103-0022 (JP)
(74) Representative: J A Kemp LLP
(86) International application number: PCT/JP2024/009332
(87) International publication number: WO 2024/232158

(57) **Abstract**

A terminal (6) notifying information to the passenger of a vehicle is sent guide information at the time of transfer to fixed schedule transportation which the passenger is planning to ride. The guide information includes the guide information relating to action which the passenger can take at the time of transfer in accordance with the time difference (Δt) from when the vehicle arrives at the departure and arrival location of the fixed schedule transportation which the passenger is planning to ride until the fixed schedule transportation which the passenger is planning to ride departs.

## Description

### FIELD

The present invention relates to an information processing device, an information processing method and a program.

### BACKGROUND

Known is the art of a multimodal route search in which a route combining several means of transport is searched for, wherein a route utilizing the optimum means of transport for the weather on the route is proposed (for example, see Patent Literature 1).

### CITATION LIST

### PATENT LITERATURE

Patent Literature 1: Japanese Unexamined Patent Publication No. 2022-130046

### SUMMARY

### TECHNICAL PROBLEM

In this regard, for example, when a passenger of a vehicle is transferring to a fixed schedule transportation, if the passenger of the vehicle can acquire guide information at the time of transfer in advance while riding in the vehicle and, in this case, if guide information relating to action which the passenger can take in accordance with a time difference from when the vehicle arrives at the departure and arrival location of the fixed schedule transportation to when the fixed schedule transportation departs can be acquired in advance, the passenger can utilize the guide information to thereby effectively utilize the time from when the vehicle arrives at the departure and arrival location of the fixed schedule transportation to when the fixed schedule transportation departs. However, the above-mentioned known multimodal route search technique does not suggest such a thing at all.

### SOLUTION TO PROBLEM

Therefore, according to the present invention, there is provided an information processing device comprising one or more processors, the one or more processors providing guide information at the time of transfer to fixed schedule transportation which a passenger is planning to ride to a terminal notifying information to the passenger of a vehicle, the guide information including the guide information relating to action which the passenger can take at the time of transfer in accordance with a time difference from when the vehicle arrives at a departure and arrival location of the fixed schedule transportation which the passenger is planning to ride until the fixed schedule transportation which the passenger is planning to ride departs.

Further, according to the present invention, there is provided an information processing method for processing information using one or more processors, the information processing method providing guide information at the time of transfer to fixed schedule transportation which a passenger is planning to ride to a terminal notifying information to the passenger of a vehicle, the guide information including the guide information relating to action which the passenger can take at the time of transfer in accordance with a time difference from when the vehicle arrives at a departure and arrival location of the fixed schedule transportation which the passenger is planning to ride until the fixed schedule transportation which the passenger is planning to ride departs.

Furthermore, according to the present invention, there is provided a program causing a computer to provide guide information at the time of transfer to fixed schedule transportation which a passenger is planning to ride to a terminal notifying information to the passenger of a vehicle, the guide information including the guide information relating to action which the passenger can take at the time of transfer in accordance with a time difference from when the vehicle arrives at a departure and arrival location of the fixed schedule transportation which the passenger is planning to ride until the fixed schedule transportation which the passenger is planning to ride departs.

### ADVANTAGEOUS EFFECTS OF INVENTION

It is possible to effectively utilize a transfer time period.

### BRIEF DESCRIPTION OF DRAWINGS

FIG. 1 is an overview of an information processing system.
FIG. 2 is a view diagrammatically showing an information processing server shown in FIG. 1.
FIG. 3 is a view diagrammatically showing a dispatch management server shown in FIG. 1.
FIG. 4 is a view diagrammatically showing an autonomous driving taxi.
FIG. 5 is a view of the functional configuration of the autonomous driving taxi shown in FIG. 4.
FIG. 6 is a view showing a basic flow of information processing in an information processing system.
FIG. 7 is a view showing a procedure for input to terminal.
FIG. 8 is a view showing a procedure for route selection at terminal.
FIG. 9 is a flow chart for information processing.
FIG. 10 is a flow chart for information processing.
FIG. 11 is a flow chart for managing dispatch.
FIG. 12 is a flow chart for driving control of an autonomous driving taxi.
FIG. 13 is a flow chart for driving control of an autonomous driving taxi.
FIG. 14 is a flow chart for driving control of an autonomous driving taxi.
FIG. 15 is a view showing a diagrammatically shown road map.
FIG. 16 is a view showing an additional flow of information processing added to the basic flow of information processing in the information processing system.
FIG. 17 is a view showing a list of types of guide information.
FIG. 18 is a view showing an example of display of a guide on a display screen of a display device mounted on a vehicle.
FIG. 19 is a view showing an example of display of a guide on a display screen of a display device mounted on a vehicle.
FIG. 20 is a view showing an example of display of a guide on a display screen of a display device mounted on a vehicle.
FIG. 21 is a view showing a list of types of guide information.
FIG. 22 is a view showing a list of guide information.
FIG. 23 is a flow chart for processing for display of guide information.
FIG. 24 is a flow chart for processing for display of guide information.
FIG. 25 is a flow chart for searching for a departure time etc.
FIG. 26 is a flow chart for processing for determination of the type of guide information.
FIG. 27 is a flow chart for searching for guide information.
FIG. 28 is a flow chart for display processing.
FIG. 29 is a view showing a list of a first reference value and second reference value.
FIG. 30 is a flow chart for processing for determination of the type of guide information.
FIG. 31 is a flow chart for searching for guide information.
FIG. 32 is a view showing a list of the content of guide information.
FIG. 33 is a view showing a list of the content of guide information.
FIG. 34 is a view showing a list of standard spent time by category.
FIG. 35 is a view showing a list of coverage of guide information.
FIG. 36 is a flow chart for searching for guide information.

### DESCRIPTION OF EMBODIMENTS

If a person is traveling to a destination, usually there are a plurality of travel routes as travel routes for traveling to the destination, and a single travel route is selected from these plurality of travel routes. In this case, as the travel route, sometimes a travel route utilizing several different transport means, for example, a travel route transferring from a vehicle to a fixed schedule transportation, is selected. The present invention relates to an information processing technique for providing guide information to a traveling person when transferring from the vehicle to the fixed schedule transportation in such a case. In this case, manual driving vehicles, autonomous driving vehicles, private cars, commercial vehicles including taxis, etc. correspond to the vehicles covered by the present invention, while trains and other railways, monorails, buses, and aircraft correspond to fixed schedule transportation covered by the present invention. Note that, below, the present invention will be explained with reference to the case where the vehicle is an autonomous driving taxi and the case where the fixed schedule transportation is a train or other railway, but, needless to say, the present invention can be applied to vehicles other than autonomous driving taxis such as manual driving vehicles, autonomous driving vehicles, private cars, and commercial vehicles including taxis, etc. and can also be applied to services other than trains such as monorails, buses, and aircraft.

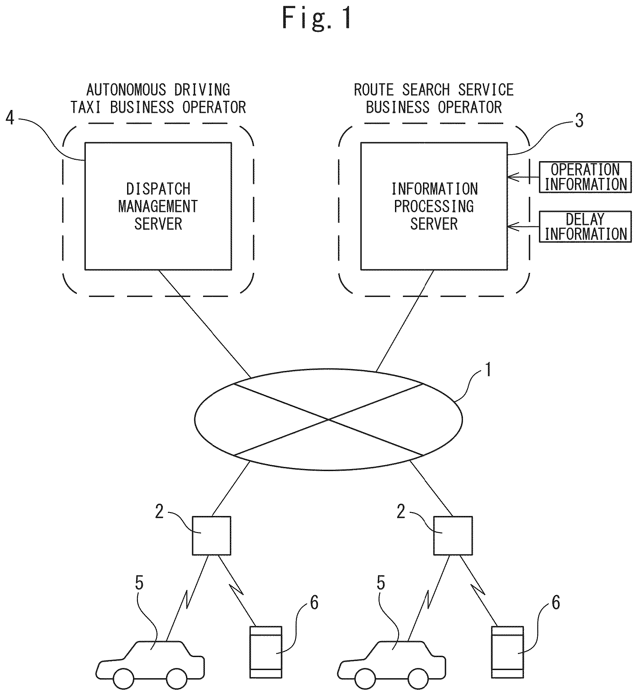

FIG. 1 shows an overview of an information processing system suitable for application of the information processing technique according to the present invention. Referring to FIG. 1, 1 shows a communication network, 2 shows base stations of the communication network 1, 3 shows an information processing server managed by a route search service business operator etc., 4 shows a dispatch management server providing a dispatch service of autonomous driving taxis managed by an autonomous driving taxi business operator etc., 5 shows autonomous driving taxis, and 6 shows terminals of users utilizing the dispatch service of autonomous driving taxis 5. Note that, in FIG. 1, the terminals 6 are drawn as mobile terminals, but the terminals 6 are not limited to mobile terminals and may also be stationary type terminals. Further, the information processing server 3 and the dispatch management server 4 can also be configured from the same server provided with the functions of the information processing server 3 and the functions of the dispatch management server 4.

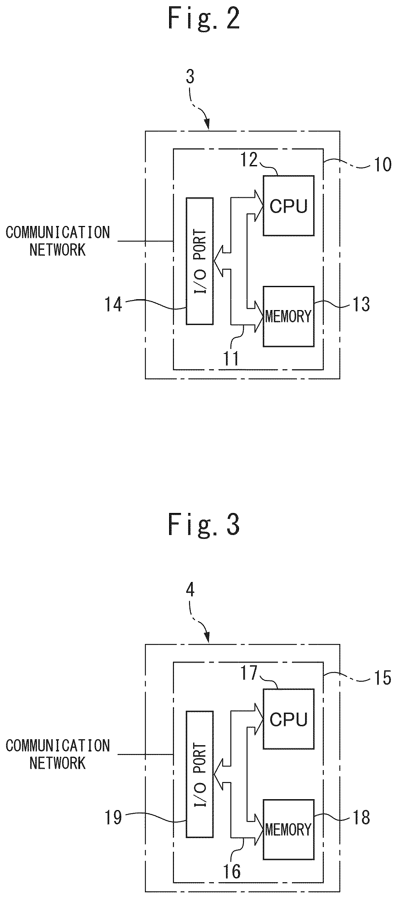

FIG. 2 shows the information processing server 3 shown in FIG. 1. Referring to FIG. 2, an electronic control unit 10 is provided inside the information processing server 3. This electronic control unit 10 is comprised of a digital computer and is provided with a CPU (microprocessor) 12, a memory 13 comprised of a ROM and RAM, and an input/output port 14, which are connected to each other by a bidirectional bus 11. This electronic control unit 10 is connected to the communication network 1.

FIG. 3 shows the dispatch management server 4 shown in FIG. 1. Referring to FIG. 3, an electronic control unit 15 is provided inside the dispatch management server 4. This electronic control unit 15 is comprised of a digital computer and is provided with a CPU (microprocessor) 17, a memory 18 comprised of a ROM and RAM, and an input/output port 19, which are connected to each other by a bidirectional bus 16. This electronic control unit 15 is connected to the communication network 1.

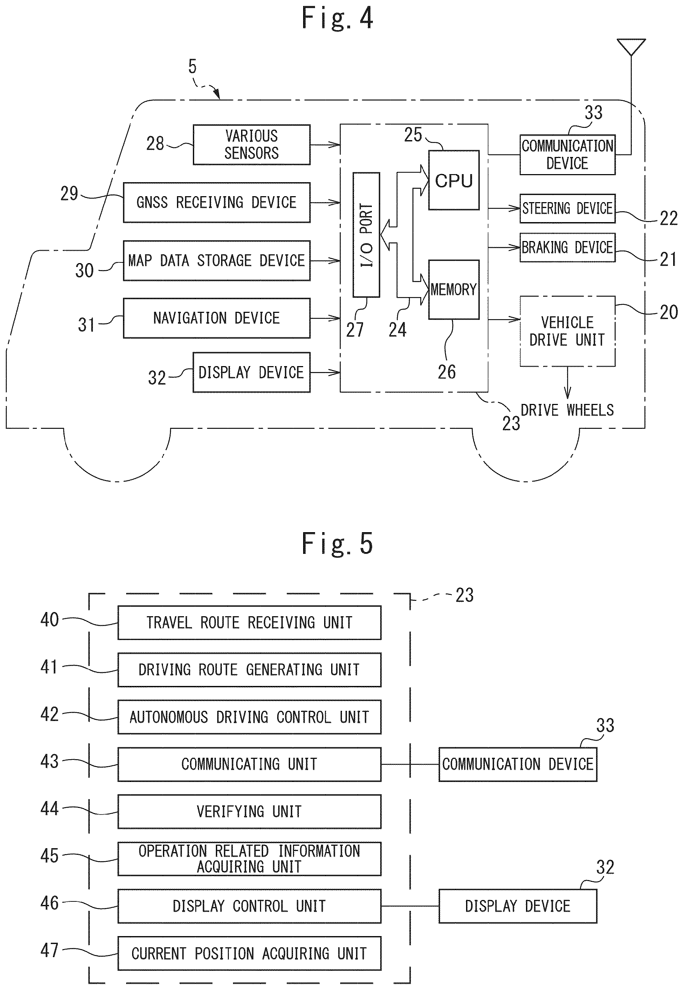

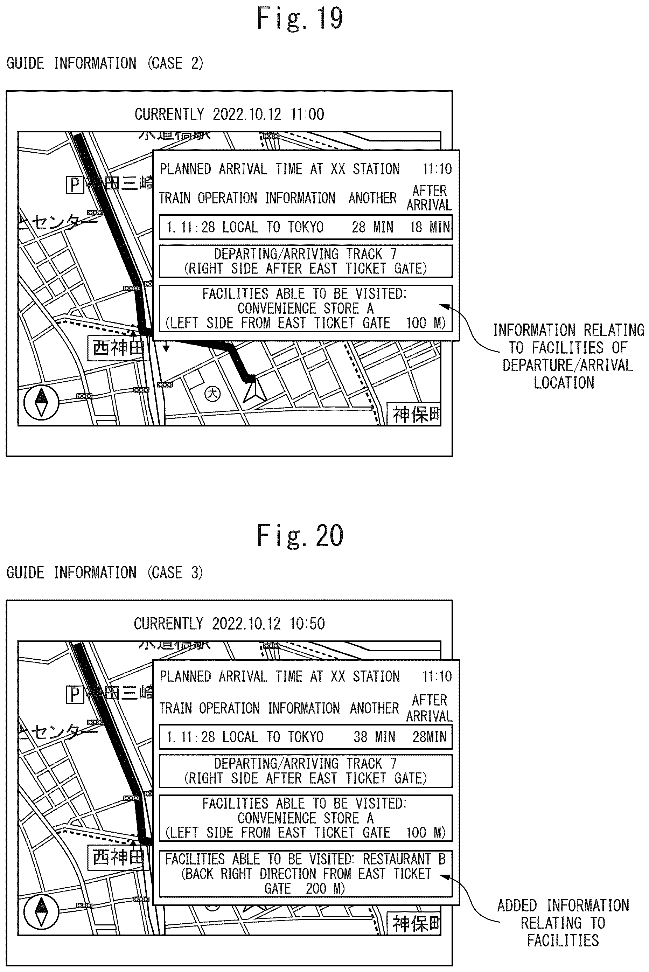

FIG. 4 diagrammatically shows one example of the autonomous driving taxi 5. Referring to FIG. 4, 20 shows a vehicle drive unit for providing drive force to the drive wheels of the autonomous driving taxi 5, 21 shows a braking device for braking the autonomous driving taxi 5, 22 shows a steering device for steering the autonomous driving taxi 5, and 23 shows an electronic control unit mounted inside the autonomous driving taxi 5. As shown in FIG. 4, the electronic control unit 23 is comprised of a digital computer and is provided with a CPU (microprocessor) 25, a memory 26 comprised of a ROM and RAM, and an input/output port 27, which are connected to each other by a bidirectional bus 24. In the example shown in FIG. 4, the vehicle drive unit 20 is comprised of an electric motor driven by a secondary battery or an electric motor driven by a fuel cell. The drive wheels are controlled in drive by these electric motors in accordance with output signals of the electronic control unit 23. Further, the braking control of the autonomous driving taxi 5 is performed by the braking device 21 in accordance with output signals of the electronic control unit 23, while the steering control of the autonomous driving taxi 5 is performed by the steering device 22 in accordance with output signals of the electronic control unit 23. Note that, this electronic control unit 23 may be comprised of a single electronic control unit or may be comprised of a plurality of electronic control units.

On the other hand, as shown in FIG. 4, various sensors 28 necessary for the autonomous driving taxi 5 to perform the autonomous driving, that is, sensors for detecting states of the autonomous driving taxi 5 and surrounding detection sensors for detecting the surroundings of the autonomous driving taxi 5 are arranged in the autonomous driving taxi 5. In this case, as sensors for detecting states of the autonomous driving taxi 5, an acceleration sensor, speed sensor, azimuth sensor are used. As the surrounding detection sensor for detecting the surroundings of the autonomous driving taxi 5, vehicle mounted cameras for capturing the areas at the front of, to the sides of, and at the rear of the autonomous driving taxi 5, a lidar, radar, etc. are used. Further, a GNSS (global navigation satellite system) reception device 29, a map data storage device 30, a navigation device 31 and a display device 32 having a display screen are provided inside the autonomous driving taxi 5.

The GNSS reception device 29 can detect the current position of the autonomous driving taxi 5 (for example, the latitude and the longitude) based on the information obtained from several artificial satellites. Therefore, the current position of the autonomous driving taxi 5 can be acquired from this GNSS reception device 29. As this GNSS reception device 29, for example, a GPS reception device is used. On the other hand, map data etc. necessary for the autonomous driving taxi 5 to perform the autonomous driving is stored in the map data storage device 30. These various sensors 28, GNSS reception device 29, map data storage device 30, navigation device 31, and display device 32 are connected to the electronic control unit 23. Further, a communication device 33 for communicating with the information processing server 3 and the dispatch management server 4 through the base station 2 and the communication network 1 is mounted inside the autonomous driving taxi 5.

On the other hand, the terminal 6 of the user utilizing the dispatch service is configured to be able to communicate with the information processing server 3, the dispatch management server 4 and the autonomous driving taxi 5 through the base station 2 and the communication network 1. In this way, in the information processing system shown in FIG. 1, the information processing server 3, the dispatch management server 4, the autonomous driving taxi 5 and the terminal 6 are able to communicate with each other through the communication network 1. Note that, in the example shown in FIG. 1, the communication device 33 of the autonomous driving taxi 5 and the terminal 6 are respectively provided with near field wireless communication functions, and the communication device 33 of the autonomous driving taxi 5 and the terminal 6 are configured to be able to communicate with each other by these near field wireless communication functions.

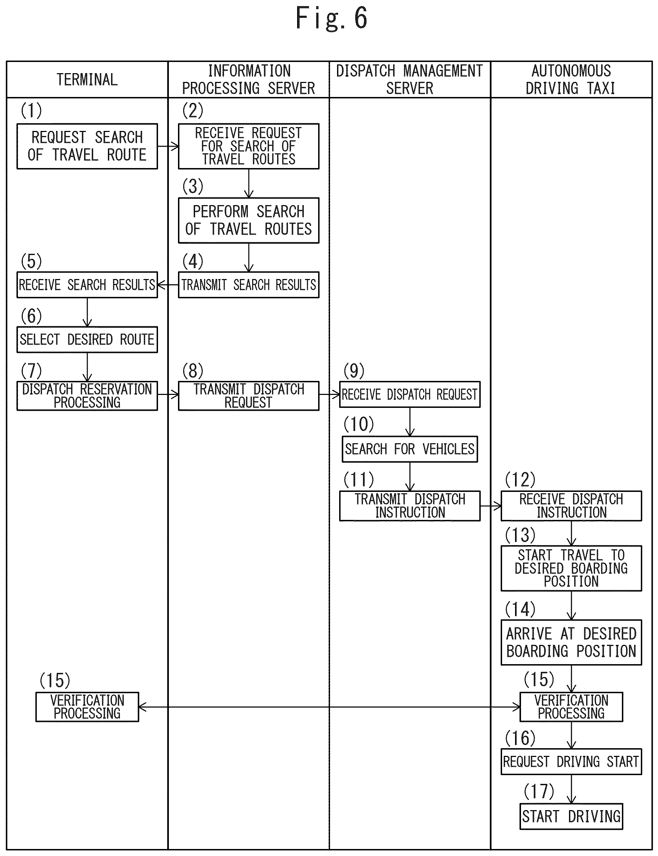

Next, referring to FIG. 6, the basic flow of information processing used in an embodiment of the present invention will be explained. In FIG. 6, the exchanges among the information processing server 3, the dispatch management server 4, the autonomous driving taxi 5 and the terminal 6 are shown. Note that, FIG. 6 shows the case where a travel route involving transferring to the fixed schedule train after riding the autonomous driving taxi 5 is selected. Now then, referring to FIG. 6, at (1), a user utilizing the dispatch service (below, simply referred to as a "user") inputs a departure place, departure time, destination, desired arrival time at the destination, etc. to the terminal 6 using a travel route search application and requests a search of travel routes.

At (2), if the information processing server 3 receives this request for search of travel routes, at (3), the information processing server 3 searches for travel routes satisfying the request based on the received departure place, departure time, destination, desired arrival time at the destination, etc. Next, at (4), the search results of the travel routes are sent from the information processing server 3 to the terminal 6. At (5), if the terminal 6 receives the search results of the travel routes, at (6), the user selects the desired travel route from among the plurality of searched travel routes on the display screen of the terminal 6 using the travel route search application.

Note that, there is a possibility that the search results of the travel routes at (4) probably does not include a travel route accompanied with transfer from the autonomous driving taxi 5 to a fixed schedule train, but the flow of information processing shown in FIG. 6 explains the case where a travel route accompanied with transfer from the autonomous driving taxi 5 to a fixed schedule train is included in the search results of the travel routes at (4) and, further, at (6), a travel route accompanied with transfer from the autonomous driving taxi 5 to a fixed schedule train is selected as the desired travel route.

Now then, if, at (6), a travel route accompanied with transfer from the autonomous driving taxi 5 to a fixed schedule train is selected, at (7), the user uses the dispatch reservation application on the display screen of the terminal 6 to register a desired dispatch content comprised of a desired boarding position, desired boarding time, and desired disembarking position of the autonomous driving taxi 5. If the desired dispatch content is registered, the fact of dispatch being reserved is sent together with the registered desired dispatch content and desired travel route of the user from the terminal 6 to the information processing server 3. If the information processing server 3 receives the fact of dispatch being reserved together with the desired dispatch content and desired travel route of the user from the terminal 6, the received desired dispatch content and desired travel route of the user are stored in the memory 18 of the information processing server 3 and at (8) the dispatch request is sent from the information processing server 3 to the dispatch management server 4. This dispatch request includes the desired dispatch content comprised of the desired travel route of the user, information relating to the train which transfer is planned to on the desired travel route of the user, and the desired boarding position, desired boarding time, and desired disembarking position of the autonomous driving taxi 5 and the user ID for identifying the user. Note that, this dispatch request can also be made to include the departure place, departure time, destination, and desired arrival time at the destination of the user which the information processing server 3 receives at (2).

If, at (9), the dispatch management server 4 receives the dispatch request, at the dispatch management server 4, at (10), an autonomous driving taxi 5 able to be dispatched to the desired boarding position of the user in the desired boarding time of the user is searched for from the autonomous driving taxis 5 positioned in the vicinity of the desired boarding position of the user, and the autonomous driving taxi 5 to be dispatched is selected. Note that, in this case, it is possible to cover only unoccupied autonomous driving taxis 5 in the search and possible to also include in the search autonomous driving taxis 5 scheduled to become unoccupied near the desired
boarding time of the user judging from the reservation information. If the autonomous driving taxi 5 to be dispatched is selected, at (11), a dispatch instruction is sent together with the desired travel route of the user, the information relating to the train which is planned to be transferred to in the desired travel route of the user, the desired dispatch content of the boarding position, disembarking position, and boarding time of the autonomous driving taxi 5 and the user ID from the dispatch management server 4 to the autonomous driving taxi 5 selected for dispatch.

If, at (12), the autonomous driving taxi 5 receives the dispatch instruction, based on the received desired boarding position of the user, a driving route from the current position to the desired boarding position of the user is generated inside the electronic control unit 23 of the autonomous driving taxi 5. Next, at (13), autonomous driving of the autonomous driving taxi 5 is started and the autonomous driving taxi 5 is made to run along the generated driving route so as to arrive at the desired boarding position of the user at the desired boarding time of the user. After that, at (14), if the autonomous driving taxi 5 arrives at the desired boarding position of the user, at (15), processing for verification of the user is performed between the terminal 6 of the user reserving dispatch and the autonomous driving taxi 5 using near field communication. This verification processing is, for example, performed by comparing the user ID stored in the memory 26 of the autonomous driving taxi 5 against the user ID stored in the terminal 6 of the user requesting dispatch. When these user IDs match, the user using the terminal 6 is verified as the user requesting the dispatch. Note that, as processing for verification of the user, facial recognition or other various known verification processings are known. At the verification processing at (15), these known verification processings can be used.

If, at (15), the user using the terminal 6 is verified as the user requesting dispatch request, the door of the autonomous driving taxi 5 is opened and the user or the user and several others get into the autonomous driving taxi 5. Next, when it is judged by a boarding confirmation device set inside the autonomous driving taxi 5 that the user or the user and several others have finished getting into the taxi, the door of the autonomous driving taxi 5 is closed. Next, at (16), if start of driving by the autonomous driving taxi 5 is requested, a driving route from the current position to the desired disembarking position of the user is generated based on the desired disembarking position of the user inside the electronic control unit 23 of the autonomous driving taxi 5. Next, at (17), autonomous driving of the autonomous driving taxi 5 is started. Note that, this request for starting driving of the autonomous driving taxi 5 is performed, for example, in such a way that the user boarding touches a driving start button displayed on the display screen of the display device 32 in the autonomous driving taxi 5.

Next, to perform the flow of the information processing shown in FIG. 6, the configurations of the information processing server 3, the dispatch management server 4, the autonomous driving taxi 5 and the terminal 6 will be successively explained. First, if explaining the configuration of the information processing server 3, the information processing server 3 is formed to be able to communicate with the dispatch management server 4, the autonomous driving taxi 5, and the terminal 6 through the communication network 1. On the other hand, the information processing server 3 is provided with a train information receiving unit able to receive operation information of a train and delay information of a train from the train operator in real time through the communication network 1. Further, the information processing server 3 is provided with a search request receiving unit for receiving search requests of travel routes together with the departure place, the departure time, the destination, the desired arrival time at the destination, etc. from the terminal 6 of the user. Further, the information processing server 3 is provided with a travel route search unit able to search for a plurality of travel routes including multimodal travel routes utilizing at least the autonomous driving taxi 5 and the train based on the departure place, the departure time, the destination, the desired arrival time at the destination, etc. received at the search request receiving unit.

Further, the information processing server 3 is provided with a search result transmitting unit for transmitting a plurality of travel routes found by the travel route search unit to the terminal 6 of the user. Further, the information processing server 3 is provided with a dispatch reservation receiving unit for receiving the desired dispatch content comprised of the desired boarding position, the desired boarding time, and the desired disembarking position of the autonomous driving taxi 5 and the fact of the reservation of dispatch together with the desired travel route of the user from the terminal 6 of the user. Further, at the information processing server 3, the desired travel route of the user, the boarding position, the disembarking position, the boarding time, and other desired dispatch content of the autonomous driving taxi 5 which the user utilizes on the desired travel route of the user, and information relating to the train which transfer is planned to on the desired travel route of the user are acquired, and the information processing server 3 is provided with a dispatch request transmitting unit for transmitting these acquired dispatch request including the desired travel route of the user, the desired dispatch content, the information relating to the train, etc. to the dispatch management server 4. Further, the information processing server 3 is provided with an information providing unit for providing various information other than the plurality of travel routes found to the user.

Next, if explaining the configuration of the dispatch management server 4, the dispatch management server 4 is formed to be able to communicate with the information processing server 3, the autonomous driving taxi 5 and the terminal 6 through the communication network 1. This dispatch management server 4 is provided with a dispatch request receiving unit for receiving from the information processing server 3 the desired travel route of the user, the boarding position, the disembarking position, the boarding time, and other desired dispatch content of the autonomous driving taxi 5 which the user utilizes, and information relating to the train which transfer is planned to. Further, the dispatch management server 4 is provided with a vehicle search unit for searching for an autonomous driving taxis 5 able to be dispatched to the desired boarding position of the user in the desired boarding time of the user from among the autonomous driving taxis 5 positioned in the vicinity of the desired boarding position of the user and selecting the autonomous driving taxi 5 to be dispatched. Furthermore, the dispatch management server 4 is provided with a dispatch instruction transmitting unit for transmitting to the autonomous driving taxi 5 selected to be dispatched the desired travel route of the user, the boarding position, the disembarking position, the boarding time, and other desired dispatch content of the autonomous driving taxi 5 which the user utilizes, and information relating to the train which transfer is planned to and the dispatch instruction.

Next, if explaining the configuration of the terminal 6, the terminal 6 is provided with a communicating unit for communicating with the information processing server 3, the dispatch management server 4, and the autonomous driving taxi 5 through the communication network 1. Further, the terminal 6 is provided with a current position acquiring unit comprised of for example a GPS reception device able to detect the current position (for example, latitude and longitude) of the terminal 6. Further, the terminal 6 has a display screen. This terminal 6 is configured to be able to input the departure place, the departure time, the destination, the desired arrival time at the destination, etc. on the display screen of the terminal 6 using the travel route search application and request a search for travel routes. Further, the terminal 6 is configured to be able to display the plurality of travel routes found at the information processing server 3 on the display screen of the terminal 6. The terminal 6 is configured to be able to select the desired travel route of the user on the display screen of the terminal 6 from among the plurality of travel routes found at the information processing server 3 and further configured to be able to reserve dispatch of the autonomous driving taxi 5 on the display screen of the terminal 6. Note that, in this case, it is possible to configure the terminal 6 so as to enable direct reservation of dispatch at the dispatch management server 4 on the display screen using a dispatch reservation application.

Finally, relating to the configuration of the autonomous driving taxi 5, the overall configuration of the autonomous driving taxi 5 was already explained while referring to FIG. 4, therefore, here, the various controls performed by the electronic control unit 23 of the autonomous driving taxi 5 will be explained while referring to the view of the functional configuration shown in FIG. 5. Referring to FIG. 5, the autonomous driving taxi 5 is provided with a travel route receiving unit 40, a driving route generating unit 41, an autonomous driving control unit 42, a communicating unit 43, a verifying unit 44, an operation related information acquiring unit 45, a display control unit 46, and a current position acquiring unit 47. Note that, in one embodiment of the information processing device according to the present invention, the travel route receiving unit 40, the communicating unit 43, the operation related information acquiring unit 45 and the display control unit 46 form the information processing device.

Now then, at FIG. 5, the travel route receiving unit 40 receives from the dispatch management server 4 the desired travel route of the user, the boarding position, the disembarking position, the boarding time, and other desired dispatch content of the autonomous driving taxi 5 which the user utilizes, and information relating to the train which transfer is planned to. Note that, in this case, the travel route receiving unit 40 can also receive these information etc. from the information processing server 3. On the other hand, the driving route generating unit 41 generates the driving route of the autonomous driving taxi 5 from the current position to the desired boarding position of the user and the driving route of the autonomous driving taxi 5 from the desired boarding position of the user to the desired disembarking position of the user based on these information etc.

The autonomous driving control unit 42 controls the autonomous driving of the autonomous driving taxi 5 along the generated driving routes. The communicating unit 43 is connected to the communication device 33 and can communicate through the communication device 33 with the information processing server 3, the dispatch management server 4 and the terminal 6. The verifying unit 44 verifies that the person boarding the autonomous driving taxi 5 is the user reserving the dispatch of the autonomous driving taxi 5. The operation related information acquiring unit 45 acquires operation related information of the train from the information processing server 3. The display control unit 46 is connected to the display device 32 having the display screen set inside the autonomous driving taxi 5. The display content of the display screen set inside the cabin of the autonomous driving taxi 5 is controlled by the display control unit 46. Further, the current position acquiring unit 47 acquires the current position of the autonomous driving taxi 5 based on the received data which the GNSS reception device 29 received

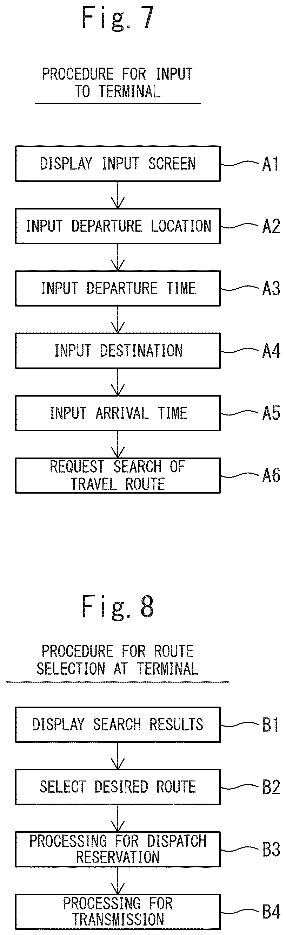

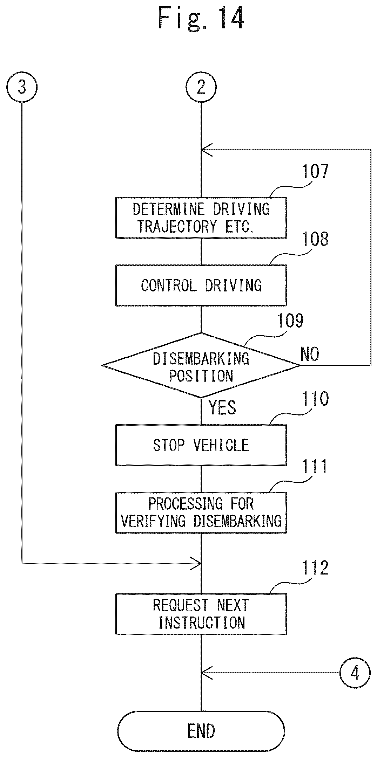

Next, referring to FIG. 7 to FIG. 14, one embodiment for performing the basic flow shown in FIG. 6 will be explained. FIG. 7 shows the procedure for input to the terminal 6 by the user. Referring to FIG. 7, first, at A1, the travel route search application is used to display a travel route search input screen on the display screen of the terminal 6. Next, at A2, for example, the departure place is entered into the departure place entry field of the input screen. In this case, it is also possible to designate the departure place on the map displayed on the display screen of the terminal 6. Next, at A3, the departure time is entered into the departure time entry field of the input screen. Next, at A4, for example, the destination is entered into the destination entry field of the input screen. In this case as well, it is also possible to designate the destination on the map displayed on the display screen of the terminal 6. Next, at A5, the desired arrival time at the destination is entered into the desired arrival time entry field of the input screen. Next, at A6, for example, a search request button displayed on the input screen is touched. If the search request button is touched, the search request of travel routes is transmitted to the information processing server 3 together with the entered departure place, the departure time, the destination, and the desired arrival time at the destination.

FIG. 8 shows the procedure for route selection at the terminal 6 by the user. Referring to FIG. 8, first, at B1, the search results of the plurality of travel routes transmitted from the information processing server 3 are displayed on the display screen of the terminal 6. Next, at B2, the desired travel route is selected from among these plurality of travel routes. Note that, at this time, as the desired travel route, the case where the travel route accompanied with transfer from the autonomous driving taxi 5 to the fixed schedule train is selected will be explained. If, at, B2 the desired travel route is selected, at B3, the user registers the desired dispatch contents comprised of the desired boarding position, the desired boarding time and the desired disembarking position in the registration fields of the desired boarding position, the desired boarding time and the desired disembarking position of the autonomous driving taxi 5 on the display screen of the terminal 6 using a vehicle reservation application. In this case as well, the desired boarding position and the desired disembarking position can also be registered by designating the desired boarding position and the desired disembarking position on the map displayed on the display screen of the terminal 6. If the desired dispatch content, comprised of these desired boarding position, desired boarding time, and desired disembarking position, is registered, at B4, the fact of dispatch being reserved is transmitted together with the registered desired dispatch content and the desired travel route of the user from the terminal 6 to the information processing server 3.

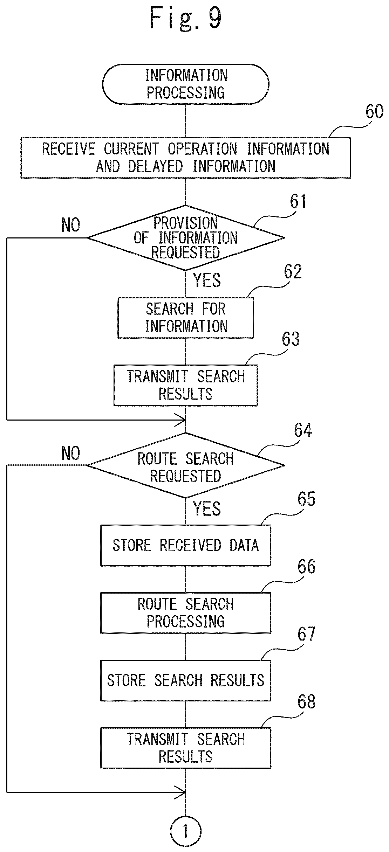

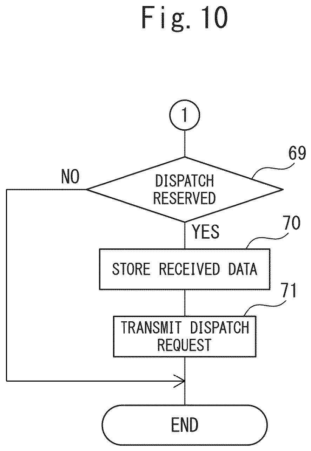

FIG. 9 and FIG. 10 show the information processing routine performed at the electronic control unit 10 of the information processing server 3. This routine is repeatedly performed. Referring to FIG. 9 and FIG. 10, first, at step 60, the current operation information of the train and the current delay information of the train are received from the train operator and the received current operation information of the train and the current delay information of the train are stored in the memory 13 of the electronic control unit 10. Next, at step 61, it is judged if there was a request for provision of the current operation information and the delay information of the train. When it is judged that there was a request for provision of the current operation information and the delay information of the train, the routine proceeds to step 62 where a search is performed for information requested to be provided. Next, the routine proceeds to step 63 where the search results of information for which provision was requested is transmitted to the party requesting provision. Next, the routine proceeds to step 64. On the other hand, when, at step 61, it is judged that there was no request for provision of the current operation information and the delay information of the train, the routine jumps to step 64.

At step 64, it is judged if the request for a search of travel routes has been received from the terminal 6. When it is judged that the request for search of travel routes has been received from the terminal 6, the routine proceeds to step 65 where the received departure place, departure time, destination, desired arrival time at the destination, and other received data of the user are stored together with the request for search of travel routes in the memory 13 of the electronic control unit 10. Next, at step 66, a plurality of travel routes satisfying the requests of the user are searched. Next, at step 67, the search results of the travel routes are stored in the memory 13 of the electronic control unit 10. Next, at step 68, the search results of the travel routes are transmitted to the terminal 6. Next, the routine proceeds to step 69. On the other hand, when at step 64 it is judged that the request for search of travel routes has not been received from the terminal 6, the routine jumps to step 69.

At step 69, it is judged if the fact of dispatch being reserved has been received from the terminal 6 along with the desired boarding position, desired boarding time, and desired disembarking position of the autonomous driving taxi 5 and the desired travel route of the user. When it is judged that the fact of dispatch being reserved has been received from the terminal 6, the routine proceeds to step 70 where the received desired boarding position, desired boarding time, desired disembarking position and the desired travel route of the user are stored in the memory 13 of the electronic control unit 10. Next, at step 71, the dispatch request including the desired travel route of the user, the information relating to the train which transfer is planned to on the desired travel route of the user, the desired boarding position, desired boarding time and desired disembarking position of the autonomous driving taxi 5, and a user ID for identifying the user is transmitted to the dispatch management server 4. On the other hand, when at step 69 it is judged that the fact of dispatch being reserved has not been received from the terminal 6, the processing cycle ends.

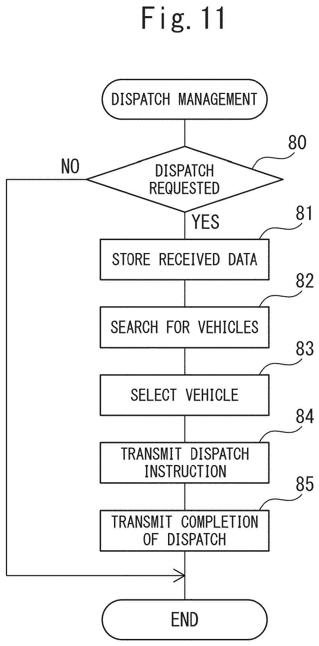

FIG. 11 shows a dispatch management routine performed at the electronic control unit 15 of the dispatch management server 4. This routine is repeatedly performed. Referring to FIG. 11, first, at step 80, it is judged if the dispatch request has been received from the information processing server 3. When it is judged that the dispatch request has not been received from the information processing server 3, the processing cycle is ended. As opposed to this, when it is judged that the dispatch request has been received from the information processing server 3, the routine proceeds to step 81 where the received desired travel route of the user, the information relating to the train which transfer is planned to on the desired travel route of the user, the desired boarding position, desired boarding time and desired disembarking position of the autonomous driving taxi 5, user ID, and other received data are stored in the memory 18 of the electronic control unit 15.

Next, at step 82, the autonomous driving taxi 5 able to be dispatched to the desired boarding position of the user in the desired boarding time period of the user is searched for from among the autonomous driving taxis 5 positioned in the vicinity of the desired boarding position of the user. Note that, in this case, it is possible to cover only unoccupied autonomous driving taxis 5 in the search and possible to also include in the search autonomous driving taxis 5 scheduled to become unoccupied near the desired boarding time of the user judging from the reservation information. Next, at step 83, the autonomous driving taxi 5 to be dispatched is selected from among the autonomous driving taxis 5 covered in the search. If the autonomous driving taxi 5 to be dispatched is selected, at step 84, the dispatch instruction is transmitted from the dispatch management server 4 to the autonomous driving taxi 5 selected for dispatch along with the desired travel route of the user, the information relating to the train which is planned to be transferred to on the desired travel route of the user, the boarding position, disembarking position and boarding time of the autonomous driving taxi 5, and other dispatch content and the user ID. Next, at step 85, the fact of dispatch being completed is transmitted to the terminal 6.

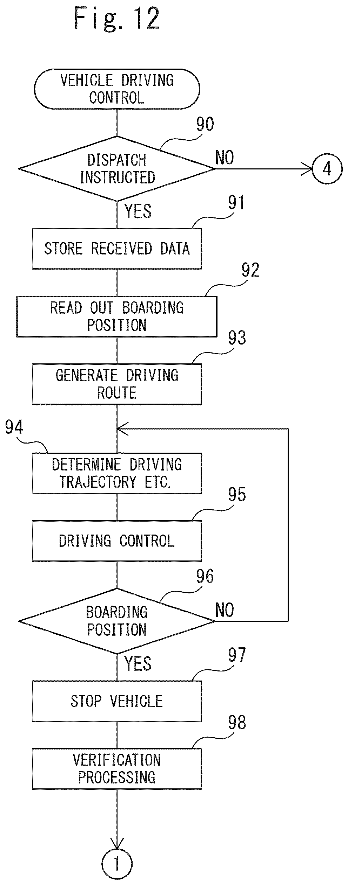

FIG. 12 to FIG. 14 show a routine for driving control of the autonomous driving taxi performed at the electronic control unit 23 of the autonomous driving taxi 5 selected for dispatch. This routine is repeatedly performed. Referring to FIG. 12 to FIG. 14, first, at step 90, it is judged whether the dispatch instruction has been received from the dispatch management server 4. When it is judged that the dispatch instruction has not been received from the dispatch management server 4, the processing cycle is ended. As opposed to this, when it is judged that the dispatch instruction has been received from the dispatch management server 4, the routine proceeds to step 91 where the received desired travel route of the user, information relating to the train which is planned to be transferred to on the desired travel route of the user, the received desired boarding position, desired boarding time and desired disembarking position of the autonomous driving taxi 5, the received user ID and other received data are stored in the memory 26 of the electronic control unit 23.

Next, at step 92, the desired boarding position of the user is read from the memory 26. Next, at step 93, the driving route of the autonomous driving taxi 5 from the current position to the desired boarding position of the user is prepared by the navigation device 31 based on the current position of the autonomous driving taxi 5 acquired by the GNSS reception device 29 and the desired boarding position read from the memory 26. Next, at step 94, the driving trajectory and driving speed of the autonomous driving taxi 5 avoiding contact with other vehicles and pedestrians are determined based on the results of detection of the cameras capturing the areas in front of etc. the autonomous driving taxi 5, lidar, radar, and other sensors. Next, at step 95, driving of the autonomous driving taxi 5 is controlled in accordance with the determined driving trajectory and driving speed.

Next, at step 96, it is judged if the autonomous driving taxi 5 reaches the desired boarding position of the user. When it is judged that the autonomous driving taxi 5 does not reach the desired boarding position of the user, the routine returns to step 94 where autonomous driving of the autonomous driving taxi 5 is continued. On the other hand, when at step 96 it is judged that the autonomous driving taxi 5 reaches the desired boarding position of the user, the routine proceeds to step 97 where the autonomous driving taxi 5 is made to stop. Next, at step 98, the processing for verification of the user is performed between the terminal 6 of the user reserving dispatch and the autonomous driving taxi 5 using near field wireless communication. This verification processing is, for example, performed by comparing the user ID stored in the memory 26 of the autonomous driving taxi 5 against the user ID stored in the terminal 6 of the user requesting dispatch at the time of the dispatch request. When these user IDs match, it is verified that the user holding the terminal 6 is the user requesting dispatch. Note that, as the user verification processing, facial recognition and other of the various known verification processings are known. As the verification processing at step 98, these known verification processings can also be used.

Next, at step 99, it is judged in the verification processing at step 98 whether the user using the terminal 6 is the user requesting dispatch. In the verification processing, when the user using the terminal 6 is not verified as the user requesting dispatch, the routine jumps to step 112 where the dispatch management server 4 is requested to instruct the next action. At this time, the autonomous driving taxi 5, for example, is made to travel by autonomous driving to the desired boarding position of another user requesting dispatch. As opposed to this, when in the verification processing it is verified that the user using the terminal 6 is the user requesting dispatch, the routine proceeds to step 100 where the door of the autonomous driving taxi 5 is opened. If the door of the autonomous driving taxi 5 is opened, the user requesting dispatch boards the autonomous driving taxi 5 alone or several persons including the user requesting dispatch board the autonomous driving taxi 5.

Next, at step 101, the boarding confirmation processing is performed for confirming that the user requesting dispatch or several persons including the user requesting dispatch have finished boarding the autonomous driving taxi 5. This boarding confirmation processing is performed by using a boarding confirmation device set inside the autonomous driving taxi 5, for example, by analyzing video of a boarding confirmation camera capturing the inside of the taxi cabin. Next, at step 102, it is judged whether the user requesting dispatch or several persons including the user requesting dispatch have been confirmed to have finished boarding the autonomous driving taxi 5. When it is judged that they have not been confirmed to have finished boarding it, the routine returns to step 101 where boarding confirmation processing for confirming completion of boarding is continued. On the other hand, when at step 102 it is judged that they have been confirmed to have finished boarding, the routine proceeds to step 103.

At step 103, the door of the autonomous driving taxi 5 is made to close. If the door of the autonomous driving taxi 5 is made to close, the routine proceeds to step 104 where start of driving of the autonomous driving taxi 5 is requested. Note that, this request for start of driving of the autonomous driving taxi 5 is, for example, made by the boarded user touching a driving start button displayed on the display screen of the display device 32 in the autonomous driving taxi 5. If start of driving of the autonomous driving taxi 5 is requested, the routine proceeds to step 105 where the desired disembarking position of the user is read from the memory 26. Next, at step 106, the driving route of the autonomous driving taxi 5 from the current position to the desired disembarking position of the user is prepared by the navigation device 31 based on the current position of the autonomous driving taxi 5 acquired from the GNSS reception device 29 and the desired disembarking position of the user read from the memory 26.

Next, at step 107, the driving trajectory and driving speed of the autonomous driving taxi 5 avoiding contact with other vehicles and pedestrians are determined based on the results of detection of the cameras capturing the areas in front of etc. the autonomous driving taxi 5, lidar, radar, and other sensors. Next, at step 108, driving of the autonomous driving taxi 5 is controlled in accordance with the determined driving trajectory and driving speed. Next, at step 109, it is judged if the autonomous driving taxi 5 reaches the desired disembarking position of the user. When it is judged that the autonomous driving taxi 5 does not reach the desired disembarking position of the user, the routine returns to step 107 where autonomous driving of the autonomous driving taxi 5 is continued. On the other hand, when at step 109 it is judged that the autonomous driving taxi 5 reaches the desired disembarking position of the user, the routine proceeds to step 110 where the autonomous driving taxi 5 is made to stop.

Next, at step 111, the disembarking confirmation processing is performed for confirming that the boarded user or several persons including the user have finished disembarking from the autonomous driving taxi 5. This disembarking confirmation processing is performed by using a disembarking confirmation device set inside the autonomous driving taxi 5 , for example, by analyzing video of a disembarking confirmation camera capturing the inside of the taxi cabin. Next, at step 112, the dispatch management server 4 is requested to instruct the next action.

In this regard, if the travel route is a multimodal travel route utilizing the autonomous driving taxi 5 and the train or other fixed schedule transportation, the user or the several passengers including the user boarding the autonomous driving taxi 5 have to disembark from the autonomous driving taxi 5, then transfer to the train or other fixed schedule transportation. When the passengers of the autonomous driving taxi 5 are transferring to the fixed schedule transportation like this, if the passengers of the autonomous driving taxi 5 can acquire guide information at the time of transfer in advance while riding in the autonomous driving taxi 5 and in this case, if guide information relating to action which the passengers can take in accordance with a time difference from when the autonomous driving taxi 5 arrives at the departure and arrival location of the fixed schedule transportation to when the fixed schedule transportation departs can be acquired in advance, the passengers can utilize this guide information to thereby effectively utilize the time from when the autonomous driving taxi 5 arrives at the departure and arrival location of the fixed schedule transportation to when the fixed schedule transportation departs.

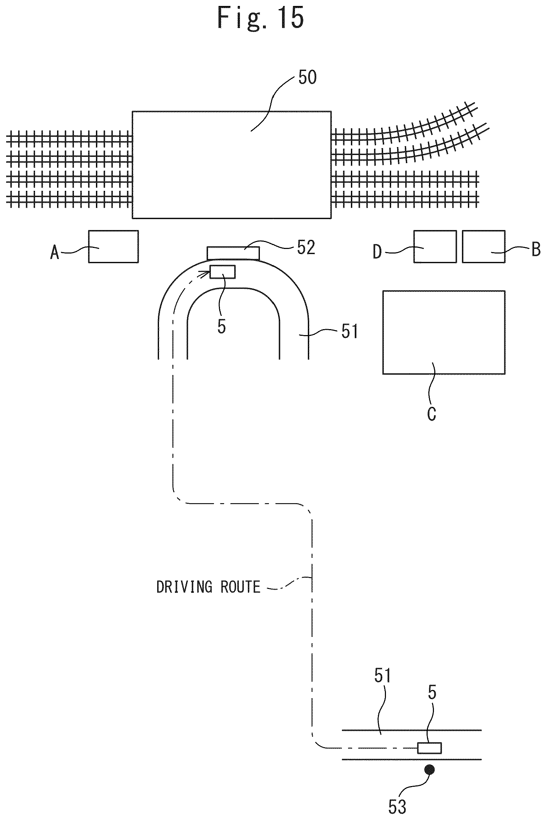

Therefore, in an embodiment according to the present invention, the passengers of the autonomous driving taxi 5 are made able to acquire guide information relating to action which the passengers can take at the time of transfer in accordance with the time difference from when the autonomous driving taxi 5 arrives at the departure and arrival location of the fixed schedule transportation to when the fixed schedule transportation departs in advance while riding in the autonomous driving taxi 5. Below, embodiments of the present invention will be explained using as an example the case where the fixed schedule transportation is the train or other railway while referring to FIG. 15 to FIG. 36.

First, referring to FIG. 15, FIG. 15 diagrammatically shows one example of the road map including the departure and arrival location of the train or other railway, that is, a station of the train. Note that, in FIG. 15, 50 shows the departure and arrival location of the train, that is, a station of the train, 51 shows a part of the road, and 52 shows the boarding/disembarking location of the vehicle. Further, in FIG. 15, A, B, C, and D show facilities located around the station 50 or inside the station 50. A shows a convenience store, B shows a restaurant, C shows a shopping center, and D shows a fast food outlet. Further, in FIG. 15, 53 shows the desired boarding position of the user for the autonomous driving taxi 5. Further, FIG. 15 shows the case where the desired disembarking position of the user is the boarding/disembarking location 52 of the vehicle and where the user boarding the autonomous driving taxi 5 at the desired boarding position 53 of the user disembarks from the autonomous driving taxi 5 at the boarding/disembarking location 52 of the vehicle.

Now then, in the example shown in FIG. 15, when the user disembarks from the autonomous driving taxi 5, if there is time until the departure time of the railroad, the user can visit the facilities A, B, C, and D in the period up to boarding the train. If there is no time until the departure time of the train, the user has to proceed directly to the ticket gate of the station 50 without visiting the facilities A, B, C, D. Further, even if the user can visit the facilities A, B, C, D in the period up to boarding the train, depending on the time difference from when the user disembarks from the autonomous driving taxi 5 to the departure time of the train, the facilities A, B, C, D able to be visited by the user ends up differing. That is, when this time difference is short, it is possible to visit the facility A, for example, the convenience store A, but it is not possible to visit the facility B separated from the boarding/disembarking location 52, for example, the restaurant B. While this time difference is long, it is possible to visit either the convenience store A and the restaurant B.

In this way, the actions which the user, that is, the passenger can take at the time of transfer change in various ways depending on the time difference from when the passenger disembarks from the autonomous driving taxi 5 to when the train departs. Therefore, if guide information relating to actions which the passenger can take at the time of transfer can be acquired in advance by the passenger while riding in the autonomous driving taxi 5, the passenger can sufficiently consider the actions at the time of transfer to the train while riding the autonomous driving taxi 5 and the passenger can immediately start the action decided on when the autonomous driving taxi 5 is just arriving at the station 50. As a result, it becomes possible to effectively utilize the time period at the time of transfer. Therefore, in an embodiment according to the present invention, guide information relating to the actions which the passenger can take when transferring to the train is presented to the passenger while riding in the autonomous driving taxi 5.

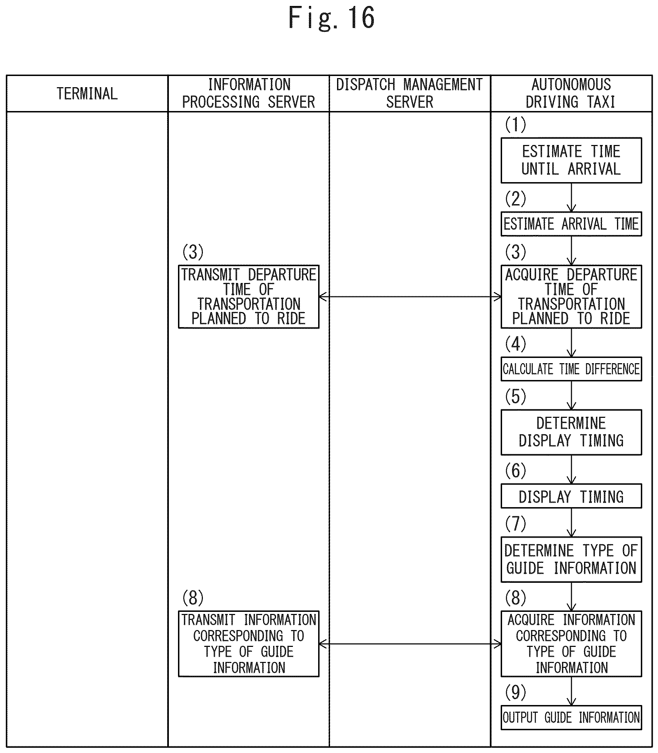

Next, this embodiment will be explained while referring to FIG. 16. This FIG. 16 shows an additional flow of information processing performed after the basic flow of information processing shown in FIG. 6. Note that, FIG. 16, like FIG. 6, shows the exchanges among the information processing server 3, the dispatch management server 4, the autonomous driving taxi 5 and the terminal 6. Further, FIG. 16 shows the case where a travel route transferring to the fixed schedule railway after riding the autonomous driving taxi 5 is selected.

Referring to FIG. 16, at (1), the time until the autonomous driving taxi 5 arrives at the desired disembarking position of the user is estimated based on the driving route generated when the start of driving is requested at (16) of FIG. 6 and the traffic information which the autonomous driving taxi 5 receives from a traffic information center. Next, at (2), the estimated arrival time when the autonomous driving taxi 5 arrives at the desired disembarking position of the user is estimated based on the estimated time until arrival at the desired disembarking position of the user and the current time. Next, at (3), in response to the inquiry from the autonomous driving taxi 5, the departure time of the train which the user is planning to ride is transmitted from the information processing server 3 to the autonomous driving taxi 5. Due to this, the autonomous driving taxi 5 acquires the departure time of the train which the user is planning to ride. This departure time of the train is the latest departure time and becomes the delayed departure time if the train is delayed.

Next, at (4), the time difference Δt between the estimated arrival time of the autonomous driving taxi 5 at the desired disembarking position of the user and the departure time of the train which the user is planning to ride is calculated. Expressed another way, at (4), the time difference Δt from when the vehicle arrives at the departure and arrival location of the fixed schedule transportation which the passenger is planning to ride to when the fixed schedule transportation which the passenger is planning to ride departs is calculated. Next, at (5), the display timing is determined for displaying the guide information on the display screen of the display device 32 of the autonomous driving taxi 5. This display timing is made a predetermined time period before the estimated arrival time of the autonomous driving taxi 5 at the desired disembarking position of the user. This predetermined time period is, for example, made greater the shorter the calculated time difference Δt.

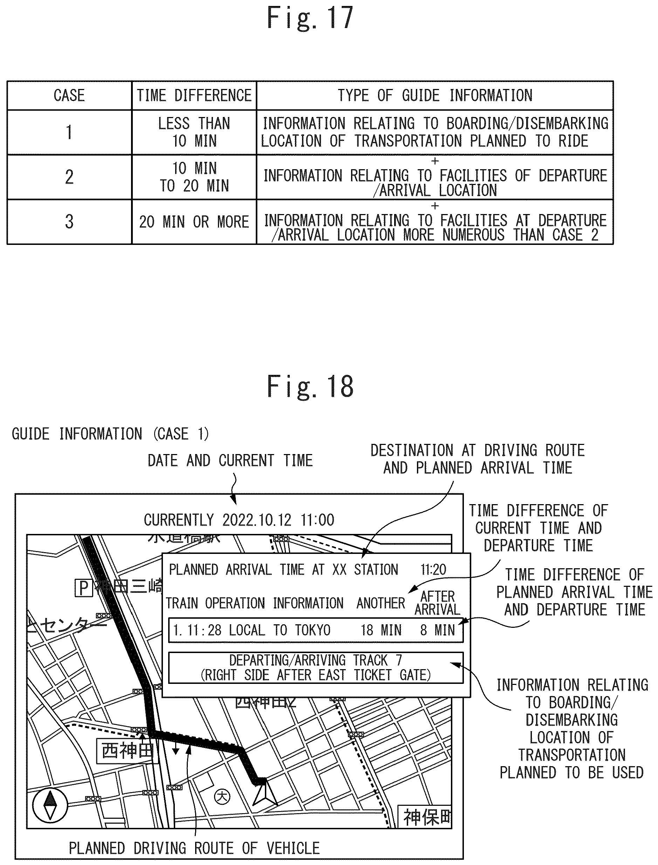

Next, at (6), if it is judged that now is the display timing, at (7), the type of guide information to be displayed on the display screen of the display device 32 of the autonomous driving taxi 5 is determined based on this time difference Δt. Here, this guide information and the type of guide information will be explained while referring to one specific example. FIG. 17 shows a list of the types of guide information while FIG. 18 to FIG. 20 show guide information displayed on the display screen of the display device 32. In the example shown in FIG. 17, the information is classified into three cases 1, 2, and 3 in accordance with the time difference Δt. In this example, case 1 is the case where the time difference Δt is the shortest one of less than 10 minutes, the case 3 is the case where the time difference Δt is the longest 20 minutes or more, and the case 2 is a case between the case 1 and the case 3 where the time difference Δt is 10 minutes to 20 minutes.

In this example, as shown in FIG. 17, in the case 1, the type of guide information is made information relating to the boarding/disembarking location of the transportation which the user is planning to ride. When the transportation is the train, this boarding/disembarking location is the platform. One specific example of the guide information displayed on the display screen of the display device 32 of the autonomous driving taxi 5 when this case 1 is shown in FIG. 18. In the one specific example shown in FIG. 18, on the surrounding margin part of and a blank part of the map screen on which the driving route of the vehicle is shown, the date and current time are displayed, the destination at the driving route of the vehicle and the planned arrival time of the vehicle are displayed as "planned arrival time at xx station", and the operation information (departure time, local, rapid, express, or other type, and destination) of the transportation which the user is planning to ride is displayed as the "train operation information".

Further, in this example, in the operation information of the transportation which the user is planning to ride, the remaining time until the departure time is displayed as "another .. minutes", the time difference Δt between the planned arrival time of the vehicle and the departure time of the transportation is displayed as "after arrival... minutes", and, as information relating to the boarding/disembarking location of the transportation which the user is planning to ride, the boarding/disembarking location "departing/arriving track 7 (right side after east ticket gate)" is displayed. In one specific example shown in FIG. 18, the time difference Δt is 8 minutes. Therefore, as will be understood from FIG. 17, this specific example corresponds to case 1. Therefore, as shown in FIG. 18, information relating to the boarding/disembarking location of the transportation which the user is planning to ride is displayed.

On the other hand, as shown in FIG. 17, in the case 2, the type of guide information is made information relating to facilities at the departure and arrival location of the transportation which the passenger is planning to ride in addition to the information relating to the boarding/disembarking location of the transportation which the user is planning to ride of the case 1. One specific example of the guide information displayed on the display screen of the display device 32 of the autonomous driving taxi 5 at the time of this case 2 is shown in FIG. 19. In the one specific example shown in FIG. 19, on the blank part of the map screen on which the driving route of the vehicle is shown, information relating to facilities of the departure and arrival location of the transportation which the passenger is planning to ride "facilities able to be visited: convenience store A (left side from east ticket gate 100 m)" is additionally displayed in addition to the display at the time of case 1 shown in FIG. 18. As shown in FIG. 19, this facility is a facility able to be visited, and in FIG. 19, as this facility, the convenience store A is displayed. Further, as shown in FIG. 19, the distance from the ticket gate of the station to this facility, that is, the convenience store A, is also displayed.

Further, in the example shown in FIG. 19 as well, in the operation information of the transportation which the user is planning to ride, the remaining time until the departure time and the time difference Δt between the planned arrival time of the vehicle and the departure time of the transportation are displayed. In one specific example shown in FIG. 19, the time difference Δt is 18 minutes. Therefore, as will be understood from FIG. 17, this specific example corresponds to case 2. Therefore, as shown in FIG. 19, information relating to the boarding/disembarking location of the transportation which the user is planning to ride and information relating to the facilities of the departure and arrival location of the transportation which the passenger is planning to ride are displayed.

On the other hand, as shown in FIG. 17, in the case 3, the type of the guide information is made information relating to more facilities than the case 2 in addition to the information relating to the boarding/disembarking location of the transportation which the user is planning to ride at the time of the case 1. One specific example of the guide information displayed on the display screen of the display device 32 of the autonomous driving taxi 5 at the time of this case 3 is shown in FIG. 20. In one specific example shown in FIG. 20, on the blank part of the map screen on which the driving route of the vehicle is shown, information relating to other facilities of the departure and arrival location of the transportation which the passenger is planning to ride "facilities able to be visited: restaurant B (back right direction from east ticket gate 200 m)" is additionally displayed in addition to the display at the time of case 2 shown in FIG. 19. As shown in FIG. 20, this facility is also a facility able to be visited, and in FIG. 20, as this facility, the restaurant B is displayed. Further, as shown in FIG. 20, the distance from the ticket gate of the station to this facility, that is, the restaurant B, is also displayed.

Further, in the example shown in FIG. 20 as well, in the operation information of the transportation which the user is planning to ride, the remaining time until the departure time and the time difference Δt between the planned arrival time of the vehicle and the departure time of the transportation are displayed. In one specific example shown in FIG. 20, the time difference Δt is 28 minutes. Therefore, as will be understood from FIG. 17, this specific example corresponds to case 3. Therefore, as shown in FIG. 20, information relating to the boarding/disembarking location of the transportation which the user is planning to ride and information relating to the more facilities of the departure and arrival location than the case 2 are displayed. Note that, in the case 3, the time difference Δt is larger compared with the case 2, so there is an extra margin of time until the departure time of the transportation compared with the case 2. Therefore, the facilities added in the case 3 are made facilities further in distance from the disembarking location from the autonomous driving taxi 5 compared with the case 2. Note that, the contents of guide information in each type of guide information corresponding to the cases 1, 2, and 3 are stored in advance in the memory 13 of the electronic control unit 10 of the information processing server 3.

Returning again to FIG. 16, at (7), if the type of guide information to be displayed on the display screen of the display device 32 of the autonomous driving taxi 5 is determined based on the time difference Δt, that is, if which of the cases among the cases 1, 2, and 3 is corresponded to is determined, at (8), the content of guide information corresponding to the type of guide information determined, that is, corresponding to the case number determined, is transmitted from the information processing server 3 to the autonomous driving taxi 5 in response to the inquiry from the autonomous driving taxi 5. Due to this, the autonomous driving taxi 5 acquires the content of guide information corresponding to the type of guide information determined, that is, corresponding to the case number determined. Next, at (9), the acquired content of guide information is output to the display device 32 of the autonomous driving taxi 5 and the guide information such as shown in FIG. 18 to FIG. 20 is displayed on the display screen of the display device 32. Note that, the content of guide information such as shown in FIG. 18 to FIG. 20 can also be transmitted to the passenger by voice from vehicle mounted speakers.

As explained above, a specific example of the list of the type of guide information is shown in FIG. 17, while specific examples of guide information displayed on the display screen of the display device 32 are shown in FIG. 18 to FIG. 20. In this case, the time difference Δt becoming the boundary of the case 1 and the case 2 and the time difference Δt becoming the boundary of the case 2 and the case 3 can be freely set. The time difference Δt becoming the boundary of the case 1 and the case 2 and the time difference Δt becoming the boundary of the case 2 and the case 3 are set to suitable values in accordance with the status of the departure and arrival locations.

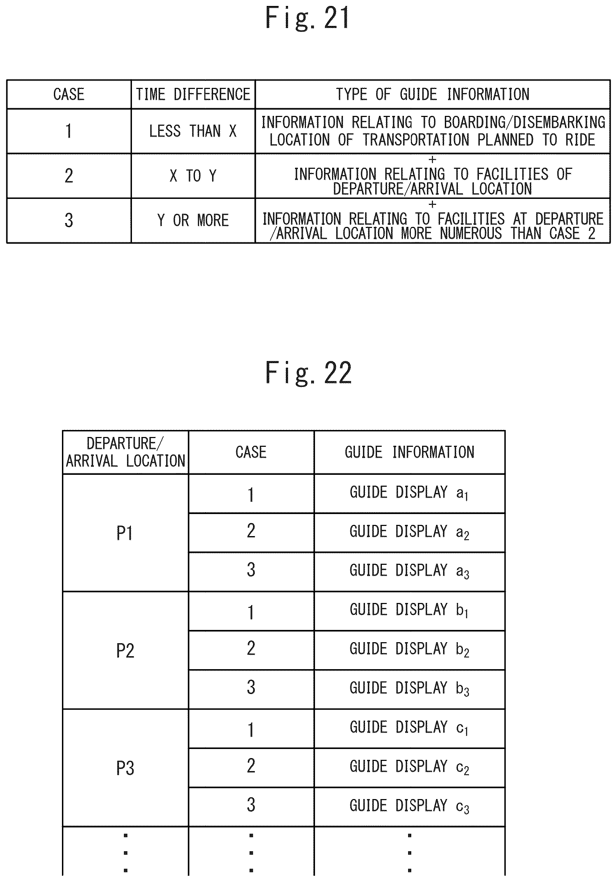

FIG. 21 shows a generalized list of the type of guide information. As shown in FIG. 21, in this generalized list of the type of guide information, a first reference value X and a second reference value Y are set for the time difference Δt. The case 1 is the case where the time difference Δt is less than the shortest first reference value X, the case 3 is the case where the time difference Δt is the longest second reference value Y or more, and the case 2 is the case between the case 1 and the case 3 where the time difference Δt is between the first reference value X and the second reference value Y. In the generalized list of the type of guide information as well, in the case 1, the type of guide information is made information relating to the boarding/disembarking location of the transportation which the user is planning to ride, in the case 2, the type of guide information is made the information relating to the boarding/disembarking location of transportation which the user is planning to ride at the time of the case 1 plus information relating to the facilities at the departure and arrival location of the transportation which the passenger is planning to ride, and in the case 3, the type of guide information is made the information relating to the boarding/disembarking location of transportation which the user is planning to ride at the time of the case 1 plus information relating to more facilities at the departure and arrival location than the case 2. Note that, in this embodiment, the facilities added in the case 3 are made facilities farther in distance from the disembarking location from the autonomous driving taxi 5 compared with the case 2.

On the other hand, FIG. 22 shows a list of the display contents of the guide information set in advance for the cases 1, 2, 3, that is, the guide displays a1, a2, a3, b1, b2, b3, c1, c2, ca3,... , for each of the departure and arrival locations P1, P2, P3..., for example, for each of the stations. In this case, the relation between the first reference value X and second reference value Y and the case number shown in FIG. 21 is stored in the memory 26 of the electronic control unit 23 of the autonomous driving taxi 5, and the display contents of the guide information corresponding to the case numbers of each of the departure and arrival locations P1, P2, P3... shown in FIG. 22, that is, the guide displays a1, a2, a3, b1, b2, b3, c1, c2, ca3,... , are stored in advance in the memory 13 of the electronic control unit 10 of the information processing server 3.

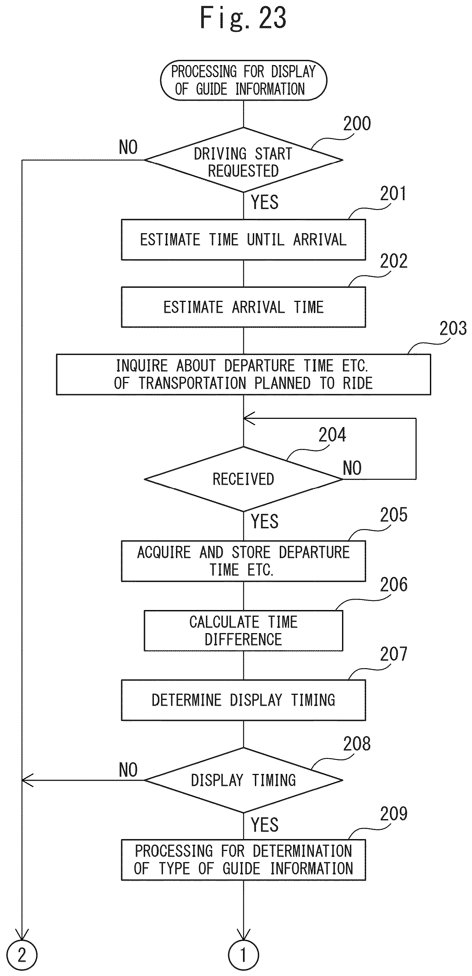

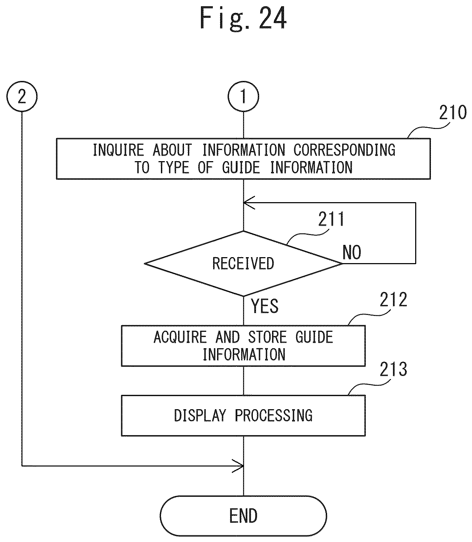

FIG. 23 and FIG. 24 show the routine for processing for display of guide information for performing the additional flow of information processing shown in FIG. 16. This routine is repeatedly performed in the electronic control unit 23 of the autonomous driving taxi 5 selected to be dispatched.

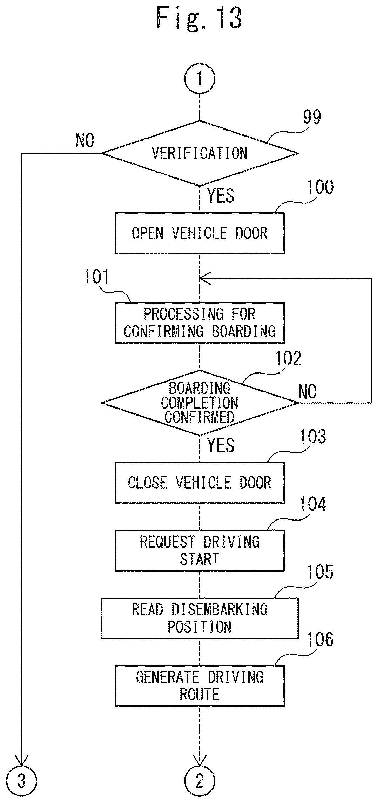

Referring to FIG. 23 and FIG. 24, first, at step 200, it is judged if start of driving of the autonomous driving taxi 5 has been requested after the fact that the user requesting dispatch has finished boarding the autonomous driving taxi 5 is confirmed,. When it is judged that the start of driving of the autonomous driving taxi 5 has not been requested, the processing cycle is ended. As opposed to this, when it is judged that the start of driving of the autonomous driving taxi 5 has been requested, the routine proceeds to step 201 where the time until the autonomous driving taxi 5 arrives at the desired disembarking position of the user is estimated based on the driving route of the autonomous driving taxi 5 up to the desired disembarking position of the user, which is generated at step 106 of FIG. 13 showing the basic flow, and traffic information which the autonomous driving taxi 5 receives from the traffic information center. Next, at step 202, the arrival time when the autonomous driving taxi 5 arrives at the desired disembarking position of the user is estimated based on the time until arriving at the desired disembarking position of the user which is estimated at step 201 and the current time. Next, at step 203, the inquiry from the autonomous driving taxi 5 to the information processing server 3 about the departure time of the train which the user is planning to ride etc. is perfomed.

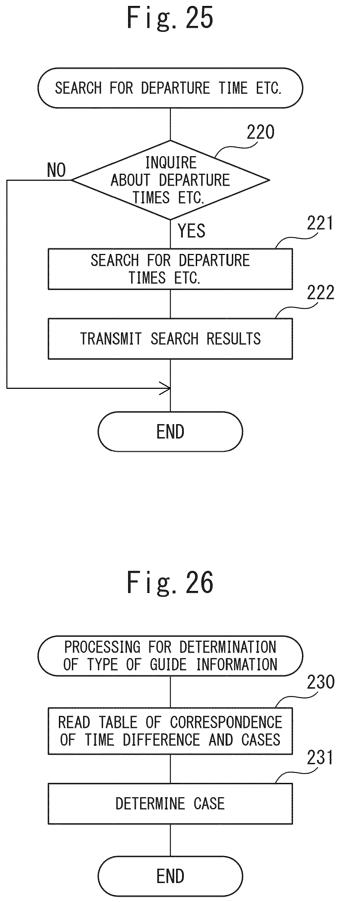

FIG. 25 shows a routine for searching for the departure time etc. performed at the electronic control unit 10 of the information processing server 3 so as to respond to this inquiry. If referring to FIG. 25, at step 220, it is judged if the inquiry from the autonomous driving taxi 5 has been received. When it is judged that the inquiry from the autonomous driving taxi 5 has been received, the routine proceeds to step 221 where the departure time of the train which the user is planning to ride, the boarding/disembarking location, the type of train such as local, rapid, and express, and the destination are searched based on the received train operation information. In this case, the departure time of the train, the boarding/disembarking location, etc. are the latest departure time and boarding/disembarking location etc. Therefore, if the train is delayed, the departure time becomes delayed. If the boarding/disembarking location etc. are changed, the boarding/disembarking location etc. become the changed ones. At step 222, the search results of these departure time etc. are transmitted from the information processing server 3 to the autonomous driving taxi 5.

Returning again to FIG. 23, at step 204, if waiting until receiving the search results of the departure time etc. and receiving the search results of the departure time etc., the routine proceeds to step 205 where the latest received departure time and boarding/disembarking location are acquired. The received latest departure time and boarding/disembarking location are stored in the memory 26 of the electronic control unit 23 of the autonomous driving taxi 5. Next, at step 206, the time difference Δt between the estimated arrival time of the autonomous driving taxi 5 at the desired disembarking position of the user and the departure time of the train which the user is planning to ride is calculated. Next, at step 207, the display timing for display of guide information on the display screen of the display device 32 of the autonomous driving taxi 5 is determined. This display timing is, for example, made a predetermined time period before the estimated time when arriving at the desired disembarking position of the user. This predetermined time period is, for example, made greater the shorter the calculated time difference Δt. Next, at step 208, it is judged whether it is the display timing. When it is judged that it is not the display timing, the processing cycle is ended. As opposed to this, when it is judged that it is the display timing, the routine proceeds to step 209 where the processing for determination of the type of guide information is performed based on the time difference Δt calculated at step 206.

The routine for processing for determination of the type of guide information is shown in FIG. 26. This routine is performed in the electronic control unit 23 of the autonomous driving taxi 5. Referring to FIG. 26, at step 230, a list of the types of guide information shown in FIG. 21 stored in the memory 26 of the electronic control unit 23 of the autonomous driving taxi 5, that is, a table of correspondence of the time difference Δt and cases, is read. Next, at step 231, which case is corresponded to is determined in accordance with the time difference Δt calculated at step 206. That is, if the time difference Δt is less than the first reference value, the case is made the case 1, if the time difference Δt is between the first reference value X and the second reference value Y, the case is made the case 2, and if the time difference Δt is the second reference value Y or more, the case is made the case 3.

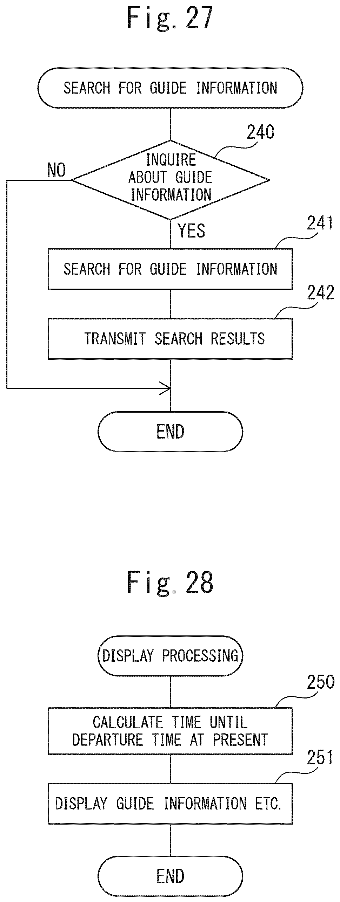

Returning again to FIG. 23, at step 209, if which case is corresponded to is determined, the routine proceeds to step 210 of FIG. 24 where the inquiry about guide information corresponding to the determined type of guide information, that is, the determined case number from the autonomous driving taxi 5 to the information processing server 3 is performed. FIG. 27 shows the routine for searching for guide information performed at the electronic control unit 10 of the information processing server 3 for responding to this inquiry.

Referring to FIG. 27, at step 240, it is judged if the inquiry from the autonomous driving taxi 5 has been received. When it is judged that then inquiry from the autonomous driving taxi 5 has been received, the routine proceeds to step 241 where guide information corresponding to the determined case number is searched for based on the list of guide information shown in FIG. 22 stored in the memory 13 of the electronic control unit 10 of the information processing server 3. That is, guide information corresponding to the departure and arrival locations P1, P2, P3... of a train which the user is planning to ride and the determined case number are searched from among the guide displays a1, a2, a3, b1, b2, b3, c1, c2, ca3,... shown in the list of guide information of FIG. 22. Next, at step 242, the content of the guide information found is transmitted from the information processing server 3 to the autonomous driving taxi 5.

Returning again to FIG. 24, at step 211, if waiting until receiving the content of guide information found and receiving the content of guide information found, the routine proceeds to step 212 where the search content of the guide information received is acquired. The search contents of the guide information received is stored in the memory 26 of the electronic control unit 23 of the autonomous driving taxi 5. Next, at step 213, processing for displaying the search contents of this guide information etc. is performed.

The routine for performing this display processing is shown in FIG. 28. This routine is performed in the electronic control unit 23 of the autonomous driving taxi 5. Referring to FIG. 28, at step 250, the remaining time from the current time until the departure time of the train which the user is planning to ride is calculated. Next, at step 251, the remaining time calculated at step 250, the time difference Δt calculated at step 206, the estimated arrival time at the desired disembarking position calculated at step 202, the departure time, the boarding/disembarking location, the type of train such as local, rapid, express, etc. of the train which the user is planning to ride, the destination acquired at step 207, and the content of guide information acquired at step 212 are output to the display device 32 of the autonomous driving taxi 5, and guide information such as shown from FIG. 18 to FIG. 20 is displayed on the display screen of the display device 32.

In this case, in the specific example shown in FIG. 18 to FIG. 20, the estimated arrival time at the desired disembarking position is displayed as the "planned arrival time at xx station", the departure time, the type of train such as local, rapid, express, etc., and the destination of the train which is planned to ride are displayed as the "train operation information", the remaining time until the departure time of the train which is planned to ride is displayed as "another ... minutes", and the time difference Δt is displayed as "after arrival... minutes". Further, in the specific example shown from FIG. 18 to FIG. 20, as the guide information relating to the boarding/disembarking location, the boarding/disembarking location "departing/arriving track 7 (right side after east ticket gate)" is displayed, as guide information relating to the facilities, "facilities able to be visited: convenience store A (left side after east ticket gate 100 m)" and "facilities able to be visited: restaurant B (back right direction from east ticket gate 200 m)" are displayed. Note that, when displaying guide information relating to the boarding/disembarking location, information relating to the direction to which the passenger should proceed toward the boarding/disembarking location, for example, the route to the boarding/disembarking location on the map displayed on the display screen of the display device 32, can be provided.

In this way, in an embodiment according to the present invention, information relating to operation of the train which is planned to ride or guide information relating to the boarding/disembarking locations and facilities is displayed on the display screen of the display device 32 of the autonomous driving taxi 5. Therefore, the electronic control unit 23 including this display device 32 configures a terminal notifying information to the passenger of the vehicle. On the other hand, in this case, information relating to operation of the train which is planned to ride and guide information relating to the boarding/disembarking locations and facilities can be displayed on the terminal 6 of the user, for example, the display screen of the mobile terminal of the user. Therefore, in an embodiment of the present invention, a "terminal notifying information to the passenger of the vehicle" indicates both the electronic control unit 23 including the display device 32 of the autonomous driving taxi 5 and the terminal 6 of the user.

In this case, when the terminal notifying the passenger of the vehicle of information is the terminal 6 of the user, basically only the user himself can see the notified information. As opposed to this, if the terminal notifying the passenger of the vehicle of information is the electronic control unit 23 including the display device 32, the notified information can be simultaneously viewed by several passengers including also the user through the display screen of the display device 32 set inside the cabin. Therefore, like in the embodiment according to the present invention, when the terminal notifying the passenger of the vehicle of information is the electronic control unit 23 including the display device 32, there is the advantage that several passengers can be simultaneously provided with information.

As explained up to here, in the present invention, the information processing device is provided with one or more processors. The one or more processors provides guide information at the time of transfer to fixed schedule transportation which the passenger is planning to ride to a terminal notifying information to the passenger of the vehicle. This guide information includes the guide information relating to action which the passenger can take at the time of transfer in accordance with the time difference Δt from when the vehicle arrives at the departure and arrival ocation of the fixed schedule transportation which the passenger is planning to ride until the fixed schedule transportation which the passenger is planning to ride departs.

Further, according to the present invention, there is provided an information processing method for processing information using one or more processors, the information processing method providing guide information at the time of transfer to the fixed schedule transportation which the passenger is planning to ride to a terminal notifying information to the passenger of the vehicle, the guide information including the guide information relating to action which the passenger can take at the time of transfer in accordance with the time difference from when the vehicle arrives at the departure and arrival location of the fixed schedule transportation which the passenger is planning to ride until the fixed schedule transportation which the passenger is planning to ride departs.

Further, according to the present invention, there is provided a program causing a computer to provide guide information at the time of transfer to the fixed schedule transportation which the passenger is planning to ride to a terminal notifying information to the passenger of the vehicle, the guide information including the guide information relating to action which the passenger can take at the time of transfer in accordance with the time difference from when the vehicle arrives at the departure and arrival location of the fixed schedule transportation which the passenger is planning to ride until the fixed schedule transportation which the passenger is planning to ride departs.

Further, in an embodiment according to the present invention, the display timing for displaying guide information on the display screen of the display device 32 of the autonomous driving taxi 5 is, for example, made a predetermined time period before an estimated time when arriving at the desired disembarking position of the user. This predetermined time period is, for example, made larger the shorter the calculated time difference Δt. That is, in an embodiment of the present invention, the display timing of the display guide on the terminal is determined based on the time difference Δt so that the notified guide information is displayed on the terminal before the vehicle arrives at the departure and arrival location. In this case, the shorter the time difference Δt, the earlier the display timing is made. That is, the shorter the calculated time difference Δt, that is, the shorter the transfer time, the greater the danger of not being in time for the transportation planned to ride unless the preparation for transfer is performed in advance, in particular if having a lot of luggage. Therefore, the shorter the time difference Δt, the earlier the display timing is made so as to inform the passenger of the autonomous driving taxi 5 about the short transfer time.

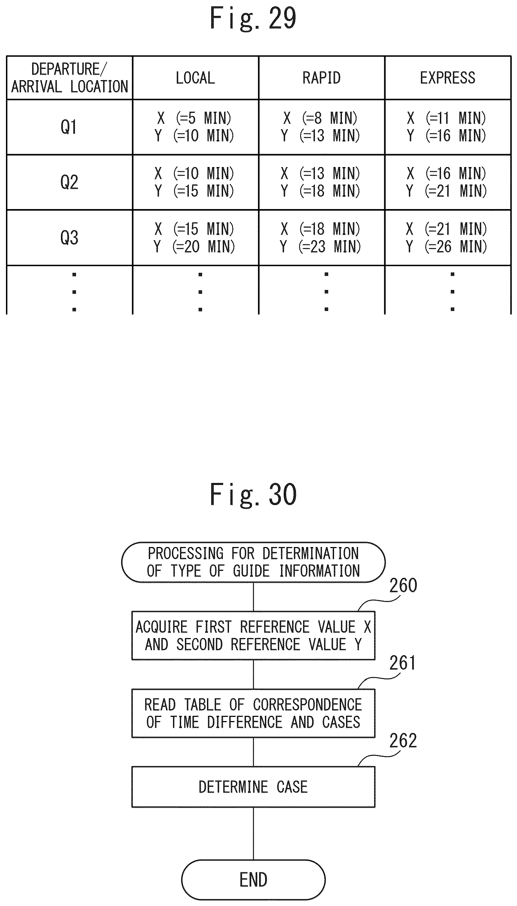

Next, referring to FIG. 29 to FIG. 36, various modifications will be explained in order. FIG. 29 and FIG. 30 show modifications in which the first reference value X and second reference value Y are changed in accordance with the departure and arrival locations Q1, Q2, Q3... of the fixed schedule transportation which the passenger is planning to ride. First, referring to FIG. 29, this FIG. 29 shows a list of the first reference value X and second reference value Y set for the departure and arrival locations Q1, Q2, Q3... in accordance with the type of train such as local, rapid, and express.

That is, if comparing a train with short operating intervals and a train with long operating intervals, the shock received when a train with long operating intervals is missed is greater compared to the shock received when a train with short operating intervals is missed, therefore when getting on a train with long operating intervals, usually it is thought desirable to include a safety margin in action compared to when getting on a train with short operating intervals. Therefore, as shown in FIG. 29, if the departure and arrival locations Q1, Q2, Q3... are the same, a rapid train with longer operating intervals compared with a local train is set with a larger first reference value X and second reference value Y compared with a local train, and an express train with longer operating intervals compared with a rapid train is set with a larger first reference value X and second reference value Y compared with a rapid train.

On the other hand, if comparing a small departure and arrival location and a large departure and arrival location, compared with a small departure and arrival location, a large departure and arrival location takes more time for travel to somewhere in the departure and arrival location, therefore compared with a small departure and arrival location, at a large departure and arrival location, it is usually thought desirable to include a safety margin in action. Therefore, in FIG. 29, if the areas of the departure and arrival locations are made larger in the order of Q1, Q2, Q3..., as shown in FIG. 29, for any of local trains, rapid trains, and express trains, the larger the area of the departure and arrival location, the larger the first reference value X and second reference value Y are set. Note that, FIG. 29 shows one example of the specific times of the first reference value X and second reference value Y. A list of the first reference value X and second reference value Y shown in FIG. 29 is stored in the memory 13 of the electronic control unit 10 of the information processing server 3.

In this modification as well, the routine for processing for display of guide information shown in FIG. 23 and FIG. 24, the routine for search of departure time etc. shown in FIG. 25, the routine for processing for determination of the type of guide information shown in FIG. 27, and the routine for display processing shown in FIG. 28 are used. Note that, in the routine for processing for determination of the type of guide information, instead of the routine for processing for determination of the type of guide information shown in FIG. 26, the routine for processing for determination of the type of guide information shown in FIG. 30 is used. Next, the routine for processing for determination of the type of guide information shown in FIG. 30 will be explained. Note that, the routine for processing for determination of the type of guide information is performed in the electronic control unit 23 of the autonomous driving taxi 5.

Referring to FIG. 30, at step 260, a list of the first reference value X and second reference value Y shown in FIG. 29 stored in the memory 13 of the electronic control unit 10 of the information processing server 3 is accessed and the first reference value X and second reference value Y corresponding to the departure and arrival locations Q1, Q2, Q3... utilized by the user and the type of train such as local, rapid, and express are acquired. Next, at step 261, a list of the type of guide information shown in FIG. 21 stored in the memory 26 of the electronic control unit 23 of the autonomous driving taxi 5, that is, a table of correspondence of the time difference Δt and the cases, is read. Next, at step 262, which of the cases is corresponded to is determined in accordance with the time difference Δt calculated at step 206 of FIG. 23. That is, if the time difference Δt is less than the first reference value X, it is deemed the case 1, if the time difference Δt is between the first reference value X to the second reference value Y, it is deemed the case 2, and if the time difference Δt is the second reference value Y or more, it is deemed the case 3.

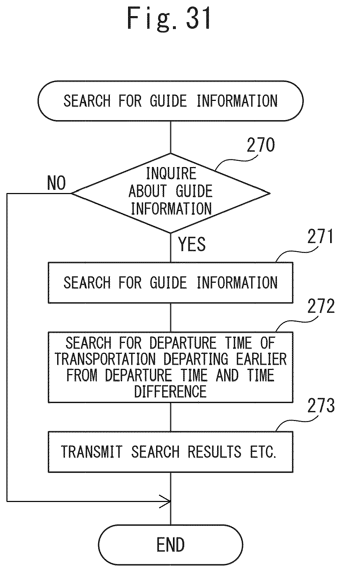

Next, referring to FIG. 31, another modification will be explained. This modification shows the case where when, comparing the departure time of the transportation , for example, a train which the user is planning to board and the time difference Δt, it is possible to board transportation departing before the transportation which is planned to be boarded, guide information relating to the departure time etc. of the transportation departing before the transportation planned to be boarded is made to be displayed on the display screen of the display device 32 of the autonomous driving taxi 5.

In this modification as well, the routine for processing for display of guide information shown in FIG. 23 and FIG. 24, the routine for search of departure time etc. shown in FIG. 25, the routine for processing for determination of the type of guide information shown in FIG. 26, and the routine for display processing shown in FIG. 28 are used. Note that, in the routine for search of guide information, instead of the routine for search of guide information shown in FIG. 27, the routine for search of guide information shown in FIG. 31 is used. Next, the routine for search of guide information shown in this FIG. 31 will be explained. Note that, this routine for search of guide information is performed in the electronic control unit 10 of the information processing server 3.

Referring to FIG. 31, at step 270, it is judged if the inquiry has been received from the autonomous driving taxi 5. When it is judged that the inquiry has been received from the autonomous driving taxi 5, the routine proceeds to step 271 where guide information corresponding to the case number determined is searched for based on the list of guide information shown in FIG. 22 stored in the memory 13 of the electronic control unit 10 of the information processing server 3. That is, guide information corresponding to the departure and arrival locations P1, P2, P3... of the transportation, for example, a train which the user is planning to ride and the determined case number is searched for from the guide information a1, a2, a3, b1, b2, b3, c1, c2, ca3,... shown in the list of guide information of FIG. 22.

Next, at step 272, based on the train operation information received from the train operator, a search is conducted of the departure time etc. of transportation, for example, a train which can be ridden and departs before the transportation planned to ride, based on the departure time of the transportation, for example, a train which the user is planning to ride and the time difference Δt. When there is transportation, for example, a train which can be ridden and departs before the transportation planned to ride, at the next step 273, in addition to guide information corresponding to the case number found, guide information relating to the transportation, for example, a train which can be ridden and departs before the transportation planned to ride, for example, the departure time, the boarding/disembarking location, the type of train such local, rapid, and express, etc. are transmitted from the information processing server 3 to the autonomous driving taxi 5. The transmitted guide information, that is, guide information corresponding to the case number found and guide information relating to the transportation, for example, a train which can be ridden and departs before the transportation planned to ride, is displayed on the display screen of the display device 32 of the autonomous driving taxi 5.

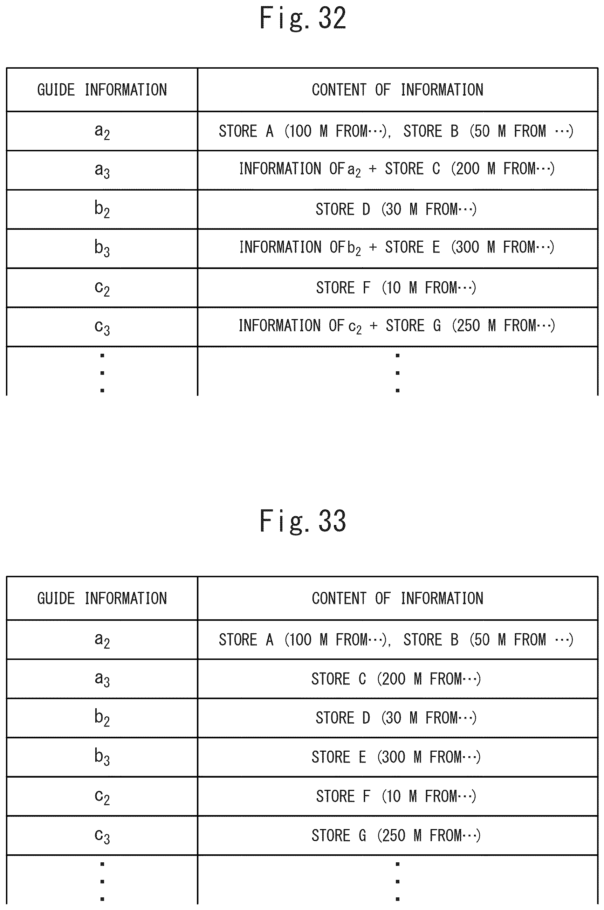

FIG. 32 and FIG. 33 show two specific examples of the guide information a2, a3, b2, b3, c2, ca3, ... in the case 2 and case 3 for each departure and arrival location P1, P2, P3... shown in FIG. 22. As shown in FIG. 32 and FIG. 33, in these two specific examples, as the guide information a2, a3, b2, b3, c2, ca3, ..., the names of several facilities and the distances from the disembarking position of the autonomous driving taxi 5 to the facilities, that is, store A (100 m from ...), store B (50 m from ...), store C (200 m from ...), store D (30 m from ...), store E (300 m from ...), store F (10 m from ...), and store G (250 m from ...) are employed. Note that, the "from ..." in parentheses means "from the disembarking position from the autonomous driving taxi 5".

Now then, referring to FIG. 32 and FIG. 33, in each specific example, as the guide information a2, b2, c2 for the case 2, facilities with relatively short distances from the disembarking position from the autonomous driving taxi 5, that is, store A (100 m from ...), store B (50 m from ...), store D (30 m from ...), and store F (10 m from ...) are employed. Next, referring to the guide information a3, b3, c3 for the case 3, in the specific example shown in FIG. 32, as the guide information a3, b3, c3, respectively, facilities with relatively long distances from the disembarking position from the autonomous driving taxi 5, that is, store C (200 m from ...), store E (300 m from ...), and store G (250 m from ...) plus the guide information a2, b2, c2 for the case 2 are employed. As opposed to this, in the specific example shown in FIG. 33, as the guide information a3, b3, c3, only facilities with relatively long distances from the disembarking position from the autonomous driving taxi 5, that is, store C (200 m from ...), store E (300 m from ...), and store G (250 m from ...) are employed.

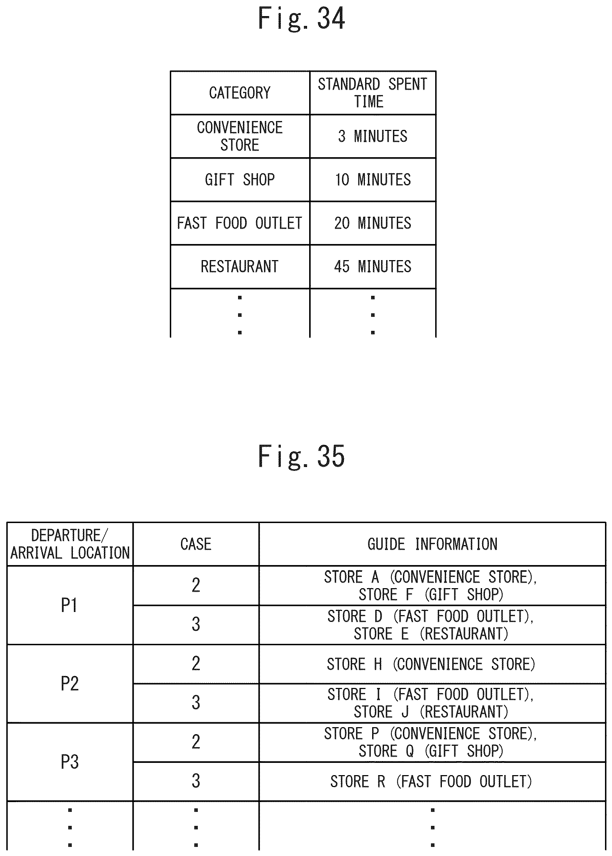

Next, referring to FIG. 34 to FIG. 36, still another modification will be explained. As explained above, in the example shown in FIG. 32 and FIG. 33, the facilities are classified into facilities belonging to the case 2 and facilities belonging to the case 3 based on the distances from the disembarking position from the autonomous driving taxi 5 to the facilities. That is, facilities with relatively short distances are made facilities belonging to the case 2 while facilities with longer distances than facilities belonging to the case 2, that is, facilities with relatively long distances, are made facilities belonging to the case 3. As opposed to this, in the modification shown from FIG. 34 to FIG. 36, the facilities are classified into facilities belonging to the case 2 and facilities belonging to the case 3 based on the standard spent times at the facilities. That is, reference values are set for the standard spent times, and facilities with standard spent times shorter than the reference values are made facilities belonging to the case 2, while facilities with standard spent times longer than the reference values, that is, facilities with standard spent times longer than the facilities belonging to the case 2, are made facilities belonging to the case 3.

In this case, as the standard spent times, the average spent times calculated based on the values actually measured at the different facilities can be used. The average spent times acquired from the site of an external server providing average spent times can also be used. In this case, the standard spent times can be stored in the form of standard spent times for the individual facilities, for example, store A (5 minutes), store B (60 minutes), store C (35 minutes), store D (25 minutes), store E (10 minutes), store F (10 minutes), and store G (45 minutes), in advance in the memory 13 of the electronic control unit 10 of the information processing server 3 and can be stored in the form of standard spent times for the individual categories of the facilities in advance in the memory 13 of the electronic control unit 10 of the information processing server 3.

FIG. 34 to FIG. 36 show the case of storing the standard spent times in the form of the standard spent times for the individual categories of facilities in advance in the memory 13 of the electronic control unit 10 of the information processing server 3. In this case, as shown in FIG. 34, the standard spent times are stored in the memory 13 of the electronic control unit 10 of the information processing server 3 for the individual categories of facilities, for example, convenience stores, gift shops, fast food outlets, and restaurants. Further, in the information processing server 3, the electronic control unit 10 uses the table shown in FIG. 34 to classify facilities at the departure and arrival locations P1, P2, P3... as shown in FIG. 35 into facilities belonging to the case 2 and facilities belonging to the case 3. For example, at the departure and arrival location P1, the store A (convenience store) and store F (gift shop) are made facilities belonging to the case 2 with a relatively short spent time while the store D (fast food outlet) and store E (restaurant) are made facilities belonging to the case 3 with a relatively long spent time. Further, at the departure and arrival location P2, the store H (convenience store) is made a facility belonging to case 2 with a relatively short spent time and the store I (fast food outlet) and store J (restaurant) are made facilities belonging to case 3 with a relatively long spent time.

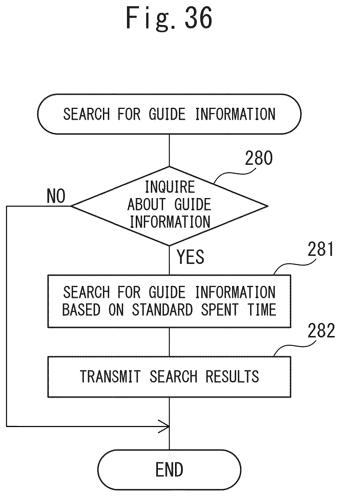

In this modification as well, the routine for processing for display of guide information shown in FIG. 23 and FIG. 24, the routine for search of departure time etc. shown in FIG. 25, the routine for processing for determination of the type of guide information shown in FIG. 26, and the routine for display processing shown in FIG. 28 are used. Note that, in the routine for search of guide information, instead of the routine for search of guide information shown in FIG. 27, the routine for search of guide information shown in FIG. 36 is used. Next, the routine for search of guide information shown in this FIG. 36 will be explained. Note that, this routine for search of guide information is performed in the electronic control unit 10 of the information processing server 3.

Referring to FIG. 36, at step 280, it is judged if the inquiry has been received from the autonomous driving taxi 5. When it is judged that the inquiry has been received from the autonomous driving taxi 5, the routine proceeds to step 281. At step 281, using the standard spent time set for each category of facility shown in FIG. 34, as shown in FIG. 35, the facilities of the different departure and arrival locations P1, P2, P3... are classified as facilities falling under the case 2 and facilities falling under the case 3 and guide information relating to facilities belonging to the determined cases are searched from among facilities falling under the classified cases.

For example, if the store A (convenience store) and store F (gift shop) shown in FIG. 35 are facilities falling under the determined case, the guide information relating to the facilities falling in this determined case is, for example, made the store A (convenience store) and store F (gift shop) or, as shown in FIG. 32 and FIG. 33, made the convenience store A (100 m from disembarking position) and gift shop F (10 m from disembarking position). Next, at step 282, in addition to the departure time, the boarding/disembarking location, local, rapid, express, or other type, and destination of the train which the user is planning to ride, guide information relating to the facilities falling under the determined case are transmitted from the information processing server 3 to the autonomous driving taxi 5 and is displayed on the display screen of the display device 32 of the autonomous driving taxi 5.

As explained above, in an embodiment according to the present invention, the guide information at the time of transfer to the fixed schedule transportation which the passenger is planning to ride includes at least one of information relating to the boarding/disembarking location of the fixed schedule transportation which the passenger is planning to ride or information relating to facilities of the departure and arrival location of the fixed schedule transportation which the passenger is planning to ride. In this way, if the passenger of the vehicle is provided with information relating to the boarding/disembarking location of this transportation or guide information relating to the facilities of the departure and arrival location in accordance with the time difference Δt from when the vehicle arrives at the departure and arrival location to when the transportation which the passenger is planning to ride departs, the passenger can utilize this guide information to judge whether to head toward the boarding/disembarking location of the transportation without visiting any facility after disembarking or whether it is possible to visit the facility. Therefore, the passenger can effectively utilize the transfer time by action taken in accordance with this judgment after disembarking.

Further, in an embodiment of the present invention, the guide information at the time of transfer to the fixed schedule transportation which the passenger is planning to ride includes information relating to the boarding/disembarking location of the fixed schedule transportation which the passenger is planning to ride if the time difference Δt from when the vehicle arrives at the departure and arrival location to when the transportation which the passenger is planning to ride departs is shorter than the first reference value X and includes information relating to the facilities at the departure and arrival location of the fixed schedule transportation which the passenger is planning to ride if this time difference Δt is longer than the first reference value X. If in this way making the content of information contained in the guide information change in accordance with the time difference Δt from when the vehicle arrives at the departure and arrival location to when the transportation which the passenger is planning to ride departs, the passenger can easily judge whether he should head toward the boarding/disembarking location of the transportation without visiting any facility after disembarking or can visit the facility. Therefore, the passenger can more effectively utilize the transfer time after disembarking.

In this case, in an embodiment of the present invention, the information relating to the facilities of the departure and arrival location of the fixed schedule transportation which the passenger is planning to ride is information relating to facilities which, judging from the time difference Δt, the passenger can visit up to when the fixed schedule transportation which the passenger is planning to ride departs. The facilities which can be visited are not limited to the convenience stores, fast food outlets, gift shops, etc. illustrated up to here and include all sorts of facilities which the passenger can visit.

Further, in an embodiment according to the present invention, when the time difference Δt is longer than the second reference value Y which is larger than the first reference value X, this guide information includes information relating to facilities longer in standard spent time or farther in distance from the disembarking location from the vehicle compared with when the time difference Δt is shorter than the second reference value Y. In this way, when the time difference Δt from when the vehicle arrives at the departure and arrival location to when the transportation which the passenger is planning to ride departs is long, it becomes possible to utilize facilities with longer standard spent times and facilities far in distance from the disembarking location of the vehicle, so by information relating to facilities long in standard spent times or facilities far in distance from the disembarking location of the vehicle being provided to the passenger of the vehicle, the passenger can more effectively utilize the transfer time.

Further, in an embodiment according to the present invention, the time difference Δt is provided together with the guide information to the terminal notifying information to the passenger of the vehicle. In this way, if the time difference Δt from when the vehicle arrives at the departure and arrival location to when the transportation which the passenger is planning to ride departs is notified to the passenger, the passenger utilizes this time difference Δt, that is, the transfer time, to be able to take action which is not provided by the guide information. Therefore, the passenger can more effectively utilize the transfer time.

### REFERENCE SIGNS LIST

1 communication network
3 information processing server
4 dispatch management server
5 autonomous driving taxi
6 terminal
10, 15, 23 electronic control unit
32 display device

## Claims

1. An information processing device comprising one or more processors,
the one or more processors providing guide information at the time of transfer to fixed schedule transportation which a passenger is planning to ride to a terminal notifying information to the passenger of a vehicle,
the guide information including the guide information relating to action which the passenger can take at the time of transfer in accordance with a time difference from when the vehicle arrives at a departure and arrival location of the fixed schedule transportation which the passenger is planning to ride until the fixed schedule transportation which the passenger is planning to ride departs.

2. The information processing device according to claim 1, wherein the guide information includes at least one of information relating to a boarding/disembarking location of the fixed schedule transportation which the passenger is planning to ride or information relating to facilities of the departure and arrival location of the fixed schedule transportation which the passenger is planning to ride.

3. The information processing device according to claim 2, wherein the guide information includes information relating to the boarding/disembarking location of the fixed schedule transportation which the passenger is planning to ride if the time difference is shorter than a first reference value and information relating to the facilities of the fixed schedule transportation which the passenger is planning to ride if the time difference is longer than the first reference value.

4. The information processing device according to claim 3, wherein, when the time difference is longer than a second reference value greater than the first reference value, as compared with when the time difference is shorter than the second reference value. the guide information includes information relating to the facilities longer in standard spent time or further in distance from a disembarking location of the vehicle.

5. The information processing device according to claim 2, wherein the information relating to the boarding/disembarking location of the fixed schedule transportation which the passenger is planning to ride includes information relating to a direction in which the passenger should proceed when the passenger is heading from a disembarking location from the vehicle toward the boarding/disembarking location of the fixed schedule transportation which the passenger is planning to ride.

6. The information processing device according to claim 2, wherein the information relating to the facilities of the departure and arrival location of the fixed schedule transportation which the passenger is planning to ride is information relating to the facilities which, judging from the time difference, the passenger can visit up to departure of the fixed schedule transportation which the passenger is planning to ride.

7. The information processing device according to claim 1, which provides the time difference along with the guide information to the terminal notifying information to the passenger of the vehicle.

8. The information processing device according to claim 1, which determines a display timing of the guide information on the terminal based on the time difference so that the provided guide information is displayed on the terminal before the vehicle arrives at the departure and arrival location.

9. The information processing device according to claim 8, wherein the shorter the time difference, the earlier the display timing.

10. An information processing method for processing information using one or more processors,
the information processing method providing guide information at the time of transfer to fixed schedule transportation which a passenger is planning to ride to a terminal notifying information to the passenger of a vehicle,
the guide information including the guide information relating to action which the passenger can take at the time of transfer in accordance with a time difference from when the vehicle arrives at a departure and arrival location of the fixed schedule transportation which the passenger is planning to ride until the fixed schedule transportation which the passenger is planning to ride departs.

11. A program causing a computer to provide guide information at the time of transfer to fixed schedule transportation which a passenger is planning to ride to a terminal notifying information to the passenger of a vehicle,
the guide information including the guide information relating to action which the passenger can take at the time of transfer in accordance with a time difference from when the vehicle arrives at a departure and arrival location of the fixed schedule transportation which the passenger is planning to ride until the fixed schedule transportation which the passenger is planning to ride departs.
